# EUROPEAN PATENT APPLICATION

(11) **EP 4 598 076 A1**
(43) Date of publication of application: **06.08.2025**
(21) Application number: 23870670.9
(22) Date of filing: 25.09.2023
(51) Int. Cl.: H04W 12/02

(54) **DATA SET GENERATION METHOD, INFORMATION SENDING METHOD, APPARATUS, AND RELATED DEVICE**

(30) Priority: 30.09.2022 CN 202211215442; 30.09.2022 CN 202211215851
(60) Divisional application: 25165569.2
(71) Applicant: Vivo Mobile Communication Co., Ltd., Dongguan, Guangdong 523863 (CN)
(72) Inventor: ZHOU, Tong, Dongguan, Guangdong 523863 (CN); SUN, Peng, Dongguan, Guangdong 523863 (CN); WU, Hao, Dongguan, Guangdong 523863 (CN)
(74) Representative: Conti, Marco
(86) International application number: PCT/CN2023/120930
(87) International publication number: WO 2024/067439

(57) **Abstract**

This application discloses a dataset generation method, an information sending method, apparatuses, and related devices, and pertains to the field of communication technology. The dataset generation method of an embodiment of this application includes: receiving, by a first device, first information from a second device, where the first information includes a first identifier and data information, the data information being information obtained by processing information related to device communication in a target processing manner and the first identifier being used to indicate the target processing manner; and generating, by the first device, a dataset based on the first identifier, where the dataset includes data information associated with the first identifier, the dataset is used for artificial intelligence AI model processing, and the AI model processing includes at least one of model inference of AI models, model training of AI models, and model monitoring of AI models.

## Description

### CROSS-REFERENCE TO RELATED APPLICATIONS

This application claims priority to Chinese Patent Application No. 202211215442.9, filed on September 30, 2022 and Chinese Patent Application No. 202211215851.9, filed on September 30, 2022, which are incorporated herein by reference in their entireties.

### TECHNICAL FIELD

This application pertains to the field of communication technologies, and specifically, relates to a dataset generation method, an information sending method, apparatuses, and related devices.

### BACKGROUND

In millimeter wave wireless communication, a first device receives information related to device communication sent by a second device to implement data collection, and may use the collected data as sample data. Taking beam information as an example, the first device receives the beam information sent by the second device, and performs model training or model inference through the beam information sent by the second device to determine transmit-receive beam pairs. However, when the first device receives information related to device communication sent by the second device, the sensitive information of the second device is prone to leakage on the first device side, resulting in poor information security.

### SUMMARY

Embodiments of this application provide a dataset generation method, an information sending method, apparatuses, and related devices, to solve the problem of poor information security.

According to a first aspect, a dataset generation method is provided. The method includes:
receiving, by a first device, first information from a second device, where the first information includes a first identifier and data information, the data information being information obtained by processing information related to device communication in a target processing manner and the first identifier being used to indicate the target processing manner; and
generating, by the first device, a dataset based on the first identifier, where the dataset includes data information associated with the first identifier, the dataset is used for artificial intelligence AI model processing, and the AI model processing includes at least one of model inference of AI models, model training of AI models, and model monitoring of AI models.

According to a second aspect, an information sending method is provided. The method includes:
processing, by a second device, information related to device communication in a target processing manner to obtain data information; and
sending, by the second device, first information to a first device, where the first information includes a first identifier and the data information, the first identifier being used to indicate the target processing manner; where
the first information is used to generate a dataset, the dataset includes data information associated with the first identifier, the dataset is used for artificial intelligence AI model processing, and the AI model processing includes at least one of model inference of AI models, model training of AI models, and model monitoring of AI models.

According to a third aspect, a dataset generation apparatus is provided, where a first device includes the dataset generation apparatus, including:
a receiving module, configured to receive first information from a second device, where the first information includes a first identifier and data information, the data information being information obtained by processing information related to device communication in a target processing manner and the first identifier being used to indicate the target processing manner; and
a generating module, configured to generate a dataset based on the first identifier, where the dataset includes data information associated with the first identifier, the dataset is used for artificial intelligence AI model processing, and the AI model processing includes at least one of model inference of AI models, model training of AI models, and model monitoring of AI models.

According to a fourth aspect, an information sending apparatus is provided, where a second device includes the information sending apparatus, including:
a processing module, configured to process information related to device communication in a target processing manner to obtain data information; and
a sending module, configured to send first information to a first device, where the first information includes a first identifier and the data information, the first identifier being used to indicate the target processing manner; where
the first information is used to generate a dataset, the dataset includes data information associated with the first identifier, the dataset is used for artificial intelligence AI model processing, and the AI model processing includes at least one of model inference of AI models, model training of AI models, and model monitoring of AI models.

According to a fifth aspect, a first device is provided. The first device includes a processor and a memory. The memory is configured to store a program or instruction capable of running on the processor. When the program or instruction is executed by the processor, the steps of the method according to the first aspect are implemented.

According to a sixth aspect, a first device is provided, including a processor and a communication interface. The communication interface is configured to receive first information from a second device, where the first information includes a first identifier and data information, the data information being information obtained by processing information related to device communication in a target processing manner and the first identifier being used to indicate the target processing manner. The processor generates a dataset based on the first identifier, where the dataset includes data information associated with the first identifier, the dataset is used for artificial intelligence AI model processing, and the AI model processing includes at least one of model inference of AI models, model training of AI models, and model monitoring of AI models.

According to a seventh aspect, a second device is provided. The second device includes a processor and a memory. The memory is configured to store a program or instruction capable of running on the processor. When the program or instruction is executed by the processor, the steps of the method according to the second aspect are implemented.

According to an eighth aspect, a second device is provided, including a processor and a communication interface. The processor is configured to obtain data information by processing information related to device communication in a target processing manner. The communication interface is configured to send first information to a first device, where the first information includes a first identifier and the data information, the first identifier being used to indicate the target processing manner. The first information is used to generate a dataset, where the dataset includes data information associated with the first identifier, the dataset is used for artificial intelligence AI model processing, and the AI model processing includes at least one of model inference of AI models, model training of AI models, and model monitoring of AI models.

According to a ninth aspect, a dataset generation system is provided, including a first device and a second device. The first device may be configured to perform the steps of the dataset generation method according to the first aspect, and the second device may be configured to perform the steps of the information sending method according to the second aspect.

According to a tenth aspect, a readable storage medium is provided, where a program or instruction is stored in the readable storage medium, and when the program or the instruction is executed by a processor, the steps of the method according to the first aspect are implemented, or the steps of the method according to the second aspect are implemented.

According to an eleventh aspect, a chip is provided, the chip including a processor and a communication interface, where the communication interface is coupled to the processor, and the processor is configured to run a program or instruction to implement the method according to the first aspect, or implement the method according to the second aspect.

According to a twelfth aspect, a computer program/program product is provided, where the computer program/program product is stored in a storage medium, and the computer program/program product is executed by at least one processor to implement the steps of the method according to the first aspect or the steps of the method according to the second aspect.

In the embodiments of this application, the first device receives first information from the second device, where the first information includes a first identifier and data information, the data information being information obtained by processing information related to device communication in a target processing manner and the first identifier being used to indicate the target processing manner. The first device generates a dataset based on the first identifier, where the dataset includes data information associated with the first identifier, the dataset is used for artificial intelligence AI model processing, and the AI model processing includes at least one of model inference of AI models, model training of AI models, and model monitoring of AI models. In this way, the dataset is generated from data information obtained by processing information related to device communication in a target processing manner, and the first device side acquires the data information processed in the target processing manner, so that sensitive information of the second device is not leaked on the first device side, and information security can be improved.

In addition, embodiments of this application provide a data collection method, a data processing method, a device, and a readable storage medium, to solve the problem of how to implement data collection without exposing beam pointing.

According to a thirteenth aspect, a data collection method is provided, including:
receiving, by a first device, first information sent by a second device, the first information including a first identifier and a virtual beam identifier;
generating, by the first device, a dataset based on the first information; and
establishing, by the first device, an association relationship between the dataset and the first identifier; where
the first identifier is an identifier of a first relationship, and the first relationship is a mapping relationship between a beam pointing of the second device and the virtual beam identifier.

According to a fourteenth aspect, a data processing method is provided, including:
mapping, by a second device, a beam pointing of the second device to a virtual beam identifier according to a first relationship; and
sending, by the second device, first information to a first device, the first information including a first identifier and the virtual beam identifier; where
the first identifier is an identifier of a first relationship, and the first relationship is a mapping relationship between a beam pointing of the second device and the virtual beam identifier.

According to a fifteenth aspect, a data collection apparatus is provided, where the apparatus is applied to a first device, and the apparatus includes:
a first receiving module, configured for the first device to receive first information sent by a second device, the first information including a first identifier and a virtual beam identifier;
a generating module, configured for the first device to generate a dataset based on the first information; and
an establishing module, configured for the first device to establish an association relationship between the dataset and the first identifier; where
the first identifier is an identifier of a first relationship, and the first relationship is a mapping relationship between a beam pointing of the second device and the virtual beam identifier.

According to a sixteenth aspect, a data processing apparatus, where the apparatus is applied to a second device and includes:
a mapping module, configured for the second device to map a beam pointing of the second device to a virtual beam identifier according to a first relationship; and
a second sending module, configured for the second device to send first information to a first device, the first information including a first identifier and the virtual beam identifier; where
the first identifier is an identifier of a first relationship, and the first relationship is a mapping relationship between a beam pointing of the second device and the virtual beam identifier.

According to a seventeenth aspect, a communication device is provided, including a processor and a memory. The memory has stored thereon a program or instruction capable of running on the processor. When the program or instruction is executed by the processor, the steps of the method according to the thirteenth aspect or the fourteenth aspect are implemented.

According to an eighteenth aspect, a communication device is provided, including a processor and a communication interface.

When the communication device is a first device, the communication interface is configured for the first device to receive first information sent by a second device, the first information including a first identifier and a virtual beam identifier.

The processor is configured for the first device to generate a dataset based on the first information.

The processor is configured for the first device to establish an association relationship between the dataset and the first identifier; where
the first identifier is an identifier of a first relationship, and the first relationship is a mapping relationship between a beam pointing of the second device and the virtual beam identifier.

When the communication device is a second device, the processor is configured for the second device to map a beam pointing of the second device to a virtual beam identifier according to a first relationship.

The communication interface is configured for the second device to send first information to a first device, the first information including a first identifier and the virtual beam identifier; where
the first identifier is an identifier of a first relationship, and the first relationship is a mapping relationship between a beam pointing of the second device and the virtual beam identifier.

According to a nineteenth aspect, a communication system is provided, including a first device and a second device. The first device may be configured to perform the steps of the method according to the thirteenth aspect, and the second device may be configured to perform the steps of the method according to the fourteenth aspect.

According to a twentieth aspect, a readable storage medium is provided, where a program or instruction is stored in the readable storage medium, and when the program or instruction is executed by a processor, the steps of the method according to the thirteenth aspect are implemented, or the steps of the method according to the fourteenth aspect are implemented.

According to a twenty-first aspect, a chip is provided. The chip includes a processor and a communication interface. The communication interface is coupled to the processor, and the processor is configured to run a program or instructions to implement the steps of the method according to the thirteenth aspect or the steps of the method according to the fourteenth aspect.

According to a twenty-second aspect, a computer program/program product is provided, where the computer program/program product is stored in a storage medium, and the computer program/program product is executed by at least one processor to implement the steps of the method according to the thirteenth aspect or the steps of the method according to the fourteenth aspect.

In the embodiments of this application, the first device receives first information sent by the second device and including a first identifier and a virtual beam identifier, generates a dataset based on the first information, and establishes an association relationship between the dataset and the first identifier, where the first identifier is an identifier of a first relationship, and the first relationship is a mapping relationship between a beam pointing of the second device and the virtual beam identifier. In this way, an actual beam pointing is mapped to a virtual beam identifier, and the virtual beam identifier is used as an input, output, or labeled data for subsequent AI model training and/or inference, enabling data collection without exposing beam pointing.

### BRIEF DESCRIPTION OF DRAWINGS

FIG. 1a is a block diagram of a wireless communication system to which embodiments of this application are applicable;
FIG. 1b is a block diagram of another wireless communication system to which embodiments of this application are applicable;
FIG. 2 is a flowchart of a dataset generation method according to an embodiment of this application;
FIG. 3 is a flowchart of an information sending method according to an embodiment of this application;
FIG. 4 is a structural diagram of a dataset generation apparatus according to an embodiment of this application;
FIG. 5 is a structural diagram of an information sending apparatus according to an embodiment of this application;
FIG. 6 is a structural diagram of a communication device according to an embodiment of this application;
FIG. 7 is a schematic structural diagram of a terminal according to an embodiment of this application;
FIG. 8 is a schematic structural diagram of a network-side device according to an embodiment of this application;
FIG. 9 is a schematic flowchart of a data collection method according to an embodiment of this application;
FIG. 10 is a schematic flowchart of a data processing method according to an embodiment of this application;
FIG. 11 is a schematic structural diagram of a data collection apparatus according to an embodiment of this application;
FIG. 12 is a schematic structural diagram of a data processing apparatus according to an embodiment of this application;
FIG. 13 is a schematic structural diagram of another communication device according to an embodiment of this application;
FIG. 14 is a schematic structural diagram of another terminal according to an embodiment of this application;
FIG. 15 is a first schematic structural diagram of another network device according to an embodiment of this application; and
FIG. 16 is a second schematic structural diagram of another network device according to an embodiment of this application.

### DETAILED DESCRIPTION

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It is worth noting that the technology described in the embodiments of this application is not limited to long term evolution (Long Term Evolution, LTE)/LTE-Advanced (LTE-Advanced, LTE-A) systems, but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6-th generation (6^{th} Generation, 6G) communication system.

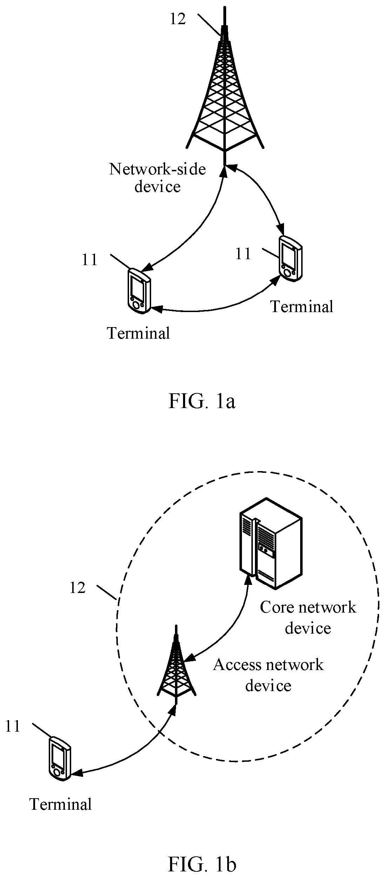

FIG. 1a is a block diagram of a wireless communication system to which embodiments of this application may be applicable. FIG. 1b is a block diagram of another wireless communication system to which embodiments of this application may be applicable. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), or pedestrian user equipment (Pedestrian User Equipment, PUE), a smart appliance (a household device with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. It should be noted that the terminal 11 is not limited to any particular type in the embodiments of this application. The network-side device 12 may include an access network device or core network device, where the access network device may also be referred to as a radio access network device, radio access network (Radio Access Network, RAN), radio access network function, or radio access network unit. The access network device may include base stations, wireless local area network (Wireless Local Area Network, WLAN) access points, wireless fidelity (Wireless Fidelity, WiFi) nodes, or the like. The base station may be referred to as Node B, evolved Node B (Evolved Node B, eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effects are achieved, the base station is not limited to any specific technical terminology. It should be noted that in the embodiments of this application, only the base station in the NR system is introduced as an example, and the specific type of the base station is not limited. The core network device may include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), application function (Application Function, AF), and the like. It should be noted that in the embodiments of this application, only the core network device in the NR system is described as an example, and the specific type of the core network device is not limited.

### First embodiment

To solve the problem of poor information security, the following describes in detail a dataset generation method, an information sending method, apparatuses, and related devices provided in embodiments of this application through some embodiments and application scenarios thereof with reference to the accompanying drawings.

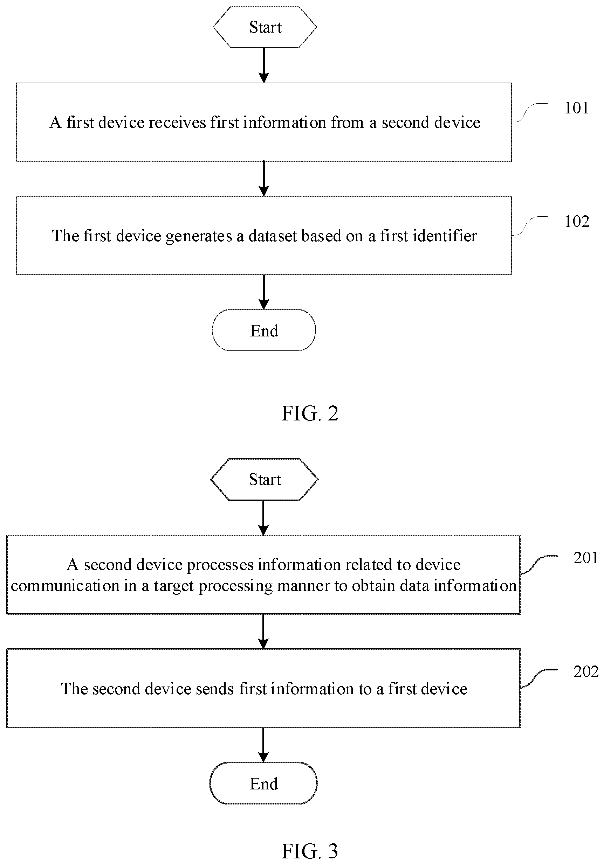

Referring to FIG. 2, FIG. 2 is a flowchart of a dataset generation method according to an embodiment of this application. As shown in FIG. 2, the dataset generation method includes the following steps.

Step 101. A first device receives first information from a second device, where the first information includes a first identifier and data information, the data information being information obtained by processing information related to device communication in a target processing manner and the first identifier being used to indicate the target processing manner.

The first identifier may be described as a privatized identifier, a privacy processing identifier, a data collection identifier, a data collection identifier, a data processing identifier, or the like. The name of the first identifier is not limited in this embodiment. The data information may be described as privacy information, privatized information, privacy processing information, or the like. The name of the data information is not limited in this embodiment. The target processing manner may be described as a mapping processing manner, a privatization manner, or the like, which is not limited in this embodiment. The target processing manner may be mapping processing, where one piece of data is mapped to one or more pieces of data; or the target processing manner may be encryption, transforming one data into an encrypted version. The specific implementation of the target processing manner is not limited in this embodiment.

In addition, the information related to device communication may include at least one of beam information, antenna configuration information, location information, speed information, orientation information, or wireless channel statistical distribution information. The information related to device communication may be sensitive information of the second device. The beam information may include at least one of beam pointing information, 3 dB beamwidth information, beam gain information, or antenna pattern information. The antenna configuration information may include an antenna configuration parameter. The location information may include at least one of terminal location information and base station location information. The speed information may include a terminal moving speed. The orientation information may include at least one of terminal antenna panel orientation information and base station antenna panel orientation information. The wireless channel statistical distribution information may include at least one of cell line-of-sight (line of sight, LOS) distribution information and cell non-line-of-sight (non-line-of-sight, NLOS) distribution information.

In an implementation, the target processing manner may be a target mapping processing manner. One piece of data may be mapped to another piece of data or multiple pieces of data through the target mapping processing manner. The target processing manner may include data bias processing, and/or data scaling processing, and/or function transformation processing, and/or multidimensional mapping processing, and/or out-of-order processing, and/or the like. In a case that the target processing manner includes data bias processing, the target processing manner may also include a bias value for the data bias processing. In a case that the target processing manner includes data scaling processing, the target processing manner may also include a scaling value for the data scaling processing. In a case that the target processing manner includes function transformation processing, the target processing manner may also include a transformation function for the function transformation processing. In a case that the target processing manner includes multidimensional mapping processing, the target processing manner may also include a mapping manner for the multidimensional mapping processing. In a case that the target processing manner includes out-of-order processing, the target processing manner may also include a parameter for the out-of-order processing.

It should be noted that the first identifier indicates the target processing manner. For example, the first identifier may be 1, 2, 3, 4, or 5, with 1 for data bias processing, 2 for data scaling processing, 3 for function transformation processing, 4 for multidimensional mapping processing, and 5 for out-of-order processing. The data information associated with the same first identifier has the same physical meaning, and the first device side generates the dataset based on the data information associated with the same first identifier without having to know the specifics of the target processing manner indicated by the first identifier. The specifics of the target processing manner may be known on the second device side but not known on the first device side, so that sensitive information of the second device is not exposed.

In addition, in some scenarios, the target processing manner may be known on the first device side without exposing sensitive information of the second device. For example, in a case that the first device and the second device are of different types, the target processing manner may be known information on the second device side and unknown information on the first device side. For example, the first device is a terminal, the second device is a base station, and the target processing manner is known on the base station side but unknown on the terminal side. When the first device and the second device are of a same type, the target processing manner may be known information on the second device side and known or unknown information on the first device side. The target processing manner is known information, characterizing that the specific content of the target processing manner can be determined. For example, the target processing manner may be data bias processing. The target processing manner is unknown information, characterizing that the specific content of the target processing manner cannot be determined. It should be noted that when the first and second devices are of the same type, the second device may directly send information related to device communication to the first device, or the second device may send data information processed in the target processing manner to the first device. Taking a base station as an example of the second device, for the acquisition of beam information from the base station, there is a risk of exposing privacy if the dataset is generated by a terminal, and there is no risk of exposing privacy if the dataset is generated by the base station. The target processing manner may be known information on the first device side.

It should be noted that the information related to device communication may be determined by a data collection requirement. The data collection requirement may include a data collection object and the number of data collections. The number of data collections may be N. The information related to device communication may include N pieces of information about the data collection object. Taking a beam as an example of the data collection object, the information related to device communication may include beam information of N beams. The data collection requirement may be sent by the first device to the second device, or may be sent by another device to the second device. A dataset generated by the first device includes data information associated with the first identifier, and the data information in the dataset may be obtained based on the same data collection requirement.

In an implementation, the information related to device communication may be information in a preset format, and the preset format may be a format predefined by a protocol, or may be a configured format, or may be a default format. Taking beam information as an example of the information related to device communication, where the beam information includes beam pointing information, the beam information in the preset format may be: (a horizontal pointing of a first beam, a horizontal pointing of a second beam, ..., a horizontal pointing of an N-th beam, a vertical pointing of the first beam, a vertical pointing of the second beam, ..., a vertical pointing of the N-th beam).

Step 102. The first device generates a dataset based on the first identifier, where the dataset includes data information associated with the first identifier, the dataset is used for artificial intelligence (Artificial Intelligence, AI) model processing, and the AI model processing includes at least one of model inference of AI models, model training of AI models, and model monitoring of AI models.

In addition, the generated dataset may be used as a training sample set for model inference of AI models, model training of AI models, or model monitoring of AI models.

It should be noted that the first device may be a data collection device, such as UE, a base station, or a core network function, and the second device may be a data processing device, such as UE, a base station, or a core network function.

In an implementation, UE receives the privatized beam information of a base station and obtains a dataset that hides the beam information of the base station. Associating a privatized identifier with the dataset enables different base stations to use a same privatization method to process beam information, so that the physical meaning of different dimension information from different base stations remains consistent, and the physical meanings of different input dimensions between different samples used for training or inference remain consistent.

In an implementation, a base station receives privatized beam information of UE and obtains a dataset that hides beam information of the UE. Associating a privatized identifier with the dataset enables different UEs to use a same privatization method to process beam information, so that the physical meaning of different dimension information from different UEs remains consistent, and the physical meanings of different input dimensions between different samples used for training or inference remain consistent.

In addition, an AI model may be used for beam prediction, channel prediction, channel quality prediction, mobility management, quality of experience (Quality of Experience, QoE) prediction, AI positioning, or the like, which is not limited in this embodiment.

In an implementation, the information related to device communication may include beam-related information, such as beam information of the second device. The method may further include determining, by the first device, beam quality based on an AI model and the dataset.

In an implementation, the information related to device communication may include channel-related information, such as beam information, antenna configuration information, and orientation information. The method may further include performing, by the first device, channel prediction based on an AI model and the dataset.

In an implementation, the information related to device communication may include channel-related information, such as beam information, antenna configuration information, and orientation information. The method may further include training, by the first device, an AI model based on the dataset, the AI model being used for channel prediction.

In an implementation, the information related to device communication may include channel quality-related information, such as location information, wireless channel statistical distribution information, and speed information. The method may further include performing, by the first device, channel quality prediction based on an AI model and the dataset.

In an implementation, the information related to device communication may include channel quality-related information, such as location information, wireless channel statistical distribution information, and speed information. The method may further include training, by the first device, an AI model based on the dataset, the AI model being used for channel quality prediction.

In an implementation, the information related to device communication may include mobility management-related information, such as beam information, antenna configuration information, location information, and speed information. The method may further include performing, by the first device, mobility management based on an AI model and the dataset.

In an implementation, the information related to device communication may include mobility management-related information, such as beam information, antenna configuration information, location information, and speed information. The method may further include training, by the first device, an AI model based on the dataset, the AI model being used for mobility management.

In an implementation, the information related to device communication may include QoE-related information, such as wireless channel statistical distribution information and terminal location information. The method may further include performing, by the first device, QoE prediction based on an AI model and the dataset.

In an implementation, the information related to device communication may include QoE-related information, such as wireless channel statistical distribution information and terminal location information. The method may further include training, by the first device, an AI model based on the dataset, the AI model being used for QoE prediction.

Currently, if data from multiple base stations with different beam configurations are to be mixed for training, it is difficult to obtain a good model from training if the model input only includes the beam identifiers locally sent by the base stations. While using beam pointing information as the model input can result in a model that achieves high prediction accuracy for various base station beam configurations. However, the beam pointing information is considered sensitive information of the base station. Providing beam pointing information during training and inference poses a risk of exposing sensitive information. In this embodiment of this application, a dataset is generated through a first identifier, where the dataset includes data information associated with the first identifier. The data information is information obtained by processing information related to device communication in a target processing manner, meaning that the beam information is privatized before being included as part of the sample input. In other words, beam pointing information is used to improve model prediction accuracy, and sensitive information is ensured not to be exposed through privatization.

In this embodiment of this application, the dataset is generated from data information obtained by processing information related to device communication in a target processing manner, and the first device side acquires the data information processed in the target processing manner and cannot recover original sensitive information of the second device, so that sensitive information of the second device is not leaked on the first device side. Associating the first identifier with the dataset enables different second devices to use a same privatization method to process sensitive information, so that the physical meaning of different dimension information from different second devices remains consistent, and the physical meanings of different input dimensions between different samples used for training or inference remain consistent.

In this embodiment of this application, the first device receives first information from the second device, where the first information includes a first identifier and data information, the data information being information obtained by processing information related to device communication in a target processing manner and the first identifier being used to indicate the target processing manner. The first device generates a dataset based on the first identifier, where the dataset includes data information associated with the first identifier, the dataset is used for artificial intelligence AI model processing, and the AI model processing includes at least one of model inference of AI models, model training of AI models, and model monitoring of AI models. In this way, the dataset is generated from data information obtained by processing information related to device communication in a target processing manner, and the first device side acquires the data information processed in the target processing manner, so that sensitive information of the second device is not leaked on the first device side, and information security can be improved.

Optionally, after the first device generates a dataset based on the first identifier, the method further includes:
performing at least one of the following according to a processed AI model:
beam prediction, channel prediction, channel quality prediction, mobility management, or quality of experience QoE prediction.

In this implementation, in a case that the AI model is used for beam prediction, the first device can perform beam prediction based on the AI model and the dataset; in a case that the AI model is used for channel prediction, the first device can perform channel prediction based on the AI model and the dataset; in a case that the AI model is used for channel quality prediction, the first device can perform channel quality prediction based on the AI model and the dataset; in a case that the AI model is used for mobility management, the first device can perform mobility management based on the AI model and the dataset; and in a case that the AI model is used for QoE prediction, the first device can perform QoE prediction based on the AI model and the data set.

Optionally, the information related to device communication includes beam information of the second device, and the method further includes:
determining, by the first device, beam quality based on an AI model and the data set.

In an implementation, the determining, by the first device, beam quality based on an AI model and the dataset may include performing, by the first device, beam prediction based on the AI model and the dataset to obtain beam quality. The first device may obtain beam quality of multiple beams, and select a beam with the best quality as the final transmit or receive beam. For example, the first device may use data of the dataset as input to the AI model for beam prediction. It should be noted that the first device may perform beam prediction based on the AI model and the dataset to obtain beam quality of all beams.

In an implementation, the determining, by the first device, beam quality based on an AI model and the dataset may include:

The first device performs model training of an AI model based on the dataset, and performs beam prediction based on the trained AI model to obtain beam quality. The beam prediction may be transmit beam prediction, receive beam prediction, or transmit-receive beam pair prediction.

The dataset may serve as a training sample set for AI models. The input of training samples in the training sample set may include sensitive information of the first device and/or the second device and the quality of partial or historical transmit-receive beam pairs. The output of the training samples may be beam quality of all transmit beams, receive beams, or transmit-receive beam pairs.

It should be noted that the first device performs data collection and sample library generation for beam prediction, while the second device can privatize sensitive beam information before sending it to the first device. As a result, on the first device side, the beam information of the second device is unknown information. This can prevent the leakage of the beam information of the second device on the first device side, thereby improving information security.

In this implementation, the first device determines the beam quality based on the AI model and the dataset, so that in the process of determining beam quality, the second device can privatize sensitive beam information before sending it to the first device. As a result, on the first device side, the beam information of the second device is unknown information. This can prevent the leakage of the beam information of the second device on the first device side, thereby improving information security.

Optionally, the information related to device communication includes beam information of the second device, the first information is associated with a reference signal resource, the dataset further includes channel quality information obtained from channel measurement based on the beam information of the second device, and the channel quality information is associated with the reference signal resource.

The first device may perform beam prediction based on the AI model and the dataset to obtain beam quality, where data in the dataset serves as input to the AI model; or, the first device may perform model training of an AI model based on the dataset, and perform beam prediction based on the trained AI model to obtain beam quality.

In an implementation, the first device is a terminal, and the second device is a network-side device (for example, a base station). The beam information of the second device may be beam information of a transmit beam of the base station. The channel quality information obtained from channel measurement based on the beam information of the second device may be channel quality information obtained by the terminal performing channel measurement on a reference signal corresponding to the transmit beam of the base station using a receive beam. The dataset may include data information, beam information of the receive beam of the terminal, and channel quality information. The data information may be information obtained by processing the beam information of the transmit beam of the base station using the target processing manner.

In an implementation, the first device is a network-side device (for example, a base station) and the second device is a terminal. The beam information of the second device may be beam information of a receive beam of the terminal. The channel quality information obtained from channel measurement based on the beam information of the second device may be channel quality information obtained by the terminal performing channel measurement on a reference signal corresponding to a transmit beam of the base station using the receive beam. The dataset may include data information, beam information of the receive beam of the terminal, and channel quality information. The data information may be information obtained by processing the beam information of the receive beam of the terminal using the target processing manner.

In this implementation, the first information is associated with a reference signal resource, the dataset further includes channel quality information obtained from channel measurement based on the beam information of the second device, and the channel quality information is associated with the reference signal resource. Thus, in a case of beam prediction based on an AI model and the dataset, the first device can use both the data information and the channel quality information obtained based on the beam information of the second device for AI model beam prediction, improving the accuracy of beam prediction; and in a case of model training of an AI model based on the dataset, the first device can use both the data information and the channel quality information obtained based on the beam information of the second device for AI model training. This improves the accuracy of model training and, in turn, improves the accuracy of beam prediction by the AI model.

Optionally, the first device is a terminal, the second device is a network-side device, and the first information is sent through a measurement configuration; or
the first device is a network-side device, the second device is a terminal, and the first information is sent through a measurement report.

In a case that the first device is a terminal and the second device is a base station, the first information is sent through a measurement configuration.

In this implementation, the first information is sent through a measurement configuration, or the first information is sent through a measurement report, so that the first information can be sent through an existing message, enabling compatibility with existing protocols.

Optionally, before the receiving, by the first device, first information from a second device, the method further includes:
sending, by the first device, second information to the second device, the second information including at least one of first indication information and second indication information; where
the first indication information is used to indicate a data collection requirement, and the second indication information is used to indicate a data processing capability of the first device for the first information.

The target processing manner may be a privatization manner, and the data processing capability of the first device for the first information may be considered as a privatized data processing capability of the first device.

In addition, after receiving the second information, the second device may determine the first information based on the second information. Data information in the first information may be generated based on the data collection requirement and the data processing capability of the first device for the first information.

In an implementation, the second device may send the first information to the first device in a case that the second indication information indicates that the first device supports generating a dataset through the first information.

In an implementation, the second indication information may indicate a maximum quantity of the data information supported by the first device, and the second device may determine a target processing manner based on the maximum quantity of the data information supported by the first device. For example, when the data collection requirement includes only one type of information related to device communication, and the maximum quantity of the data information supported by the first device does not exceed the number of data items of information related to that device communication, the target processing manner cannot be multidimensional mapping processing. In this case, the target processing manner may include data bias processing, data scaling processing, out-of-order processing, or function transformation processing. When the data collection requirement includes only one type of information related to device communication, and the maximum quantity of the data information supported by the first device exceeds the number of data items of information related to that device communication, the target processing manner may include multidimensional mapping processing.

In an implementation, the second indication information may indicate maximum and minimum numerical values supported for processing, and the second device may determine a target processing manner based on the maximum and minimum numerical values supported by the first device for processing. When the second device selects the target processing manner, the following condition is met: A numerical value of the data information obtained after processing using the target processing manner is greater than or equal to the minimum numerical value supported by the first device for processing and less than or equal to the maximum numerical value supported by the first device for processing.

In this implementation, the first device sends the second information to the second device, the second information including at least one of first indication information and second indication information; where the first indication information is used to indicate a data collection requirement, and the second indication information is used to indicate a data processing capability of the first device for the first information. In this way, the second device can process the information related to device communication based on the data collection requirement and the data processing capability of the first device for the first information, to obtain the data information.

Optionally, the data processing capability of the first device for the first information includes at least one of the following:
whether to support generating a dataset using the first information;
a maximum quantity of the data information supported; or
maximum and minimum numerical values supported for processing.

The data information may be privatized information, and the capability of whether to support generating a dataset using the first information may be a capability of whether to support privatized information processing. A maximum quantity of the data information supported may be a maximum quantity of privatized information supported.

In this implementation, the target processing manner can be determined based on at least one of whether the first device supports generating a dataset using the first information, a maximum quantity of the data information supported by the first device, maximum and minimum numerical values supported by the first device for processing, so that data information obtained from processing conforms to the capability of the first device.

Optionally, the data collection requirement includes at least one of the following:
a data collection object; or
the number of data collections.

The data collection requirement may be described as a data collection configuration. The data collection object may include at least one of beam, antenna configuration, terminal location, base station location, and wireless channel statistical distribution. The number of data collections may be a total number of pieces of data collected, or the number of pieces of data collected for each data collection object. Taking beams as an example of the data collection object, the number of data collections being 8 means that 8 beams are to be collected for beam information.

In addition, the data collection requirement may include a data collection object and the number of data collections. When the data collection requirement only includes a data collection object, the number of data collections may be predefined through a protocol or configured through a network; and when the data collection requirement only includes the number of data collections, the data collection object may be predefined through a protocol or configured through a network.

In this implementation, using at least one of a data collection object and the number of data collections, the first device can inform the second device of the data collection requirement for generation of a dataset.

Optionally, the information related to device communication includes information about the data collection object.

The data collection object may include a beam pointing, and the information related to device communication may include beam pointing information. The data collection object may include a 3 dB beamwidth, and the information related to device communication may include 3 dB beamwidth information. The data collection object may include a beam gain, and the information related to device communication may include beam gain information. The data collection object may include an antenna pattern, and the information related to device communication may include antenna pattern information. The data collection object may include a terminal moving speed, and the information related to device communication may include terminal moving speed information. The data collection object may include a terminal location, and the information related to device communication may include terminal location information. The data collection object may include a base station location, and the information related to device communication may include base station location information. The data collection object may include cell LOS distribution, and the information related to device communication may include cell LOS distribution information. The data collection object may include cell NLOS distribution, and the information related to device communication may include cell NLOS distribution information. The data collection object may include an antenna configuration parameter, and the information related to device communication may include antenna configuration parameter information.

In this implementation, the information related to device communication includes information about the data collection object, so that the second device can generate data information corresponding to the data collection object based on the data collection object indicated by the first indication information sent by the first device, allowing the first device to generate a dataset based on the data information.

Optionally, the data collection object includes at least one of the following:
a beam pointing;
a 3 dB beamwidth;
a beam gain;
an antenna pattern;
a terminal moving speed;
a terminal location;
a base station location;
cell line-of-sight LOS distribution;
cell non-line-of- sight NLOS distribution; or
an antenna configuration parameter.

The beam pointing may include at least one of a horizontal beam pointing and a vertical beam pointing. For example, the beam pointing may include a horizontal beam pointing of the beam and a vertical beam pointing of the beam. The 3 dB beamwidth may include at least one of a horizontal 3 dB beamwidth in horizontal direction and a 3 dB beamwidth in vertical direction. For example, the 3 dB beamwidth may include both a horizontal 3 dB beamwidth in horizontal direction and a 3 dB beamwidth in vertical direction. The beam gain may be a beam gain centered on the beam pointing with a 3-degree interval.

Optionally, the target processing manner includes at least one of the following:
data bias processing;
data scaling processing;
function transformation processing;
multidimensional mapping processing; or
out-of-order processing.

During out-of-order processing, a mapping relationship between an original order of the data and an order of the data after out-of-order processing may be characterized by a parameter for the out-of-order processing.

It should be noted that a bias value for the data bias processing is known on the second device side but unknown on the first device side. A scaling value for the data scaling processing is known on the second device side but unknown on the first device side. A transformation function for the function transformation processing is known on the second device side but unknown on the first device side. A mapping manner for the multidimensional mapping processing is known on the second device side but unknown on the first device side. A parameter for the out-of-order processing is known on the second device side but unknown on the first device side.

It should be noted that sensitive information of the second device side is privatized, the privatized information is associated with a privatized identifier and sent to the first device side, and the first device side generates a dataset based on the number of pieces of data and data with the same privatized identifier, thereby preventing exposure of the sensitive information of the second device side in generating the dataset on the first device side.

In an implementation, the target processing manner may include data bias processing. The data bias processing may be biasing the data. For example, if the original value is 10 and a bias value for the data bias processing is 100, then the value after the data bias processing is 10 - 100 = -90.

In an implementation, the target processing manner may include data scaling processing. The data scaling processing may be scaling the data. For example, if the original value is 100 and a reduced value for the data scaling processing is 0.1, then the value after the data scaling processing is 100*0.1 = 10.

In an implementation, the target processing manner may include function transformation processing. The function transformation processing may be performing polynomial function transformation on the data. For example, if the original value is 10 and a transformation function for the function transformation processing is f(x)= 2x^3+5, then the value after the function transformation processing is 2*10^3+5=2005.

In an implementation, the target processing manner may include multidimensional mapping processing. The multidimensional mapping processing may be performing multidimensional mapping on a single piece of data. For example, if the original value is 10 and a mapping manner for the multidimensional mapping processing is (0.1x + 2, 0.5x + 6), then the value after the multidimensional mapping processing is (0.1 * 10 + 2, 0.5 * 10 + 6), or (3, 11).

In an implementation, the target processing manner may include out-of-order processing. The out-of-order processing may be performing out-of-order operations on a set of data. For example, an original data set is (-70, -20, 20, 70, 22.5, 112.5, 22.5, 112.5), and the physical meaning of the original data set is shown in Table 1.

**Table 1**

| No. | Physical meaning in original order | Value in original order |
|---|---|---|
| 1 | Horizontal pointing of beam (beam) 1 measured | -70 |
| 2 | Horizontal pointing of beam 2 measured | -20 |
| 3 | Horizontal pointing of beam 3 measured | 20 |
| 4 | Horizontal pointing of beam 4 measured | 70 |
| 5 | Vertical pointing of beam 1 measured | 22.5 |
| 6 | Vertical pointing of beam 2 measured | 112.5 |
| 7 | Vertical pointing of beam 3 measured | 22.5 |
| 8 | Vertical pointing of beam 4 measured | 112.5 |

The parameter for the out-of-order processing is (4 3 1 5 6 7 8 2). This means that the first data after the out-of-order processing is the fourth data of the original data set, the second data after the out-of-order processing is the third data of the original data set, the third data after the out-of-order processing is the first data of the original data set, and so on. After applying out-of-order operations on the original data set, a resulting data set after the out-of-order processing is (70, 20, -70, 22.5, 112.5, 22.5, 112.5, -20). The physical meaning of this data set after the out-of-order processing is shown in Table 2.

**Table 2**

| No. | Physical meaning after out-of-order processing | Value after out-of-order processing |
|---|---|---|
| 1 | Horizontal pointing of beam 4 measured | 70 |
| 2 | Horizontal pointing of beam 3 measured | 20 |
| 3 | Horizontal pointing of beam 1 measured | -70 |
| 4 | Vertical pointing of beam 1 measured | 22.5 |
| 5 | Vertical pointing of beam 2 measured | 112.5 |
| 6 | Vertical pointing of beam 3 measured | 22.5 |
| 7 | Vertical pointing of beam 4 measured | 112.5 |
| 8 | Horizontal pointing of beam 2 measured | -20 |

In an implementation, the target processing manner to be used may be determined based on the first identifier. The target processing manner may include one or more of data bias processing, data scaling processing, function transformation processing, multidimensional mapping processing, and out-of-order processing. For example, based on the first identifier, it is determined that data bias processing and out-of-order processing were used, with a bias value for the data bias processing being 100 and a parameter for the out-of-order processing being (4 3 1 5 6 7 8 2).

The following describes the dataset generation method provided in the embodiments of this application through four specific examples.

### Embodiment 1

In this embodiment, the first device is a base station, and the second device is UE. The dataset generation method includes procedures as follows.

(11): The UE receives second information sent by the base station, the second information including first indication information and second indication information; where the first indication information is used to indicate a data collection requirement, and the second indication information is used to indicate a data processing capability of the base station for first information.

The second information may be carried through a measurement configuration. The data collection requirement indicated by the first indication information includes a data collection object and the number of data collections. The data collection object includes a horizontal beam pointing of the beam, a vertical beam pointing of the beam, a 3 dB beamwidth in the horizontal direction, and a 3 dB beamwidth in the vertical direction. The number of data collections is consistent with the number of reference signal resources, and the number of data collections is 8. A total piece of to-be-collected information may be determined through the data collection requirement to be 32.

In addition, the second indication information indicates that the base station supports the privatization capability; that is, the base station supports generating a dataset using the first information, and the maximum quantity of data information supported by the base station is 32. The data information may be considered as privatized information.

(12): The UE selects a target processing manner and determines a parameter for the target processing manner based on the second information, and the UE processes the 32 pieces of to-be-collected information based on the selected target processing manner and the parameter for the target processing manner to obtain data information.

The target processing manner may be used for privatization. Since the maximum quantity of data information supported by the base station is 32, and the total piece of to-be-collected information determined based on the data collection requirement is 32, dimension expanding operations cannot be performed on the 32 pieces of to-be-collected information, which means that the target processing manner cannot include multidimensional mapping processing. For example, the selected target processing manner may include data bias processing and out-of-order processing, and the parameter for the target processing manner include a bias value for the data bias processing and a parameter for the out-of-order processing. The selection of the target processing manner and the corresponding parameter may be made by looking up a predefined table or based on a random number sent from the base station.

(13) The UE sends the first information to the base station. The first information includes a first identifier and data information. The first identifier is used to indicate a target processing manner and a parameter for the target processing manner.

The first identifier may be considered as a privatized identifier. The UE sends the privatized 32 pieces of data information and the first identifier to the base station.

(14): The base station generates a dataset based on the first identifier and data information with a same number of data bits from a plurality of UEs or a same UE. The dataset includes data information associated with the first identifier, and the data information included in the dataset has a same number of data bits.

### Embodiment 2

In this embodiment, the first device is UE, and the second device is a base station. The dataset generation method includes procedures as follows.

(21): The base station receives second information sent by the UE, the second information including first indication information and second indication information; where the first indication information is used to indicate a data collection requirement, and the second indication information is used to indicate a data processing capability of the UE for first information.

The data collection requirement indicated by the first indication information includes a data collection object and the number of data collections. The data collection object includes a horizontal beam pointing of the beam, a vertical beam pointing of the beam, a 3 dB beamwidth in the horizontal direction, and a 3 dB beamwidth in the vertical direction. The number of data collections is consistent with the number of requested reference signal resources, which is assumed to be 8. A total piece of to-be-collected information may be determined through the data collection requirement to be 32.

In addition, the second indication information indicates that the UE supports the privatization capability; that is, the UE supports generating a dataset using the first information, and the maximum quantity of data information supported by the UE is 1000. The data information may be considered as privatized information.

(22): The base station selects a target processing manner and determines a parameter for the target processing manner based on the second information, and the base station processes the 32 pieces of to-be-collected information based on the selected target processing manner and the parameter for the target processing manner to obtain data information.

The target processing manner may be used for privatization. Since the maximum quantity of data information supported by the UE is 1000, and the total piece of to-be-collected information determined based on the data collection requirement is 32, dimension expanding operations can be performed on the 32 pieces of to-be-collected information, which means that the target processing manner can include multidimensional mapping processing. For example, the selected target processing manner may include data bias processing, multidimensional mapping processing, and out-of-order processing, and the parameter for the target processing manner include a bias value for the data bias processing, a mapping manner for the multidimensional mapping processing, and a parameter for the out-of-order processing. The selection of the target processing manner and the corresponding parameter may be made by looking up a predefined table or based on a random number sent from the UE. For example, the multidimensional mapping processing involves expanding 1 piece of data to 3 pieces of data, and the base station processes the 32 pieces of to-be-collected information based on the selected target processing manner and the parameter for the target processing manner to obtain 96 pieces of data information.

(23) The base station sends the first information to the UE. The first information includes a first identifier and data information. The first identifier is used to indicate a target processing manner and a parameter for the target processing manner.

The first identifier may be considered as a privatized identifier. The base station sends the privatized 96 pieces of data information and the first identifier to the UE.

(24): The UE generates a dataset based on the first identifier and data information with a same number of data bits from a plurality of base stations or a same base station. The dataset includes data information associated with the first identifier, and the data information included in the dataset has a same number of data bits.

### Embodiment 3

In this embodiment, the first device is a core network function, and the second device is UE. The dataset generation method includes procedures as follows.

(31): The UE receives second information sent by the core network function, the second information including first indication information and second indication information; where the first indication information is used to indicate a data collection requirement, and the second indication information is used to indicate a data processing capability of the core network function for first information.

The data collection requirement indicated by the first indication information includes a data collection object and the number of data collections. The data collection object includes a horizontal beam pointing of the beam, a vertical beam pointing of the beam, a 3 dB beamwidth in the horizontal direction, and a 3 dB beamwidth in the vertical direction. The number of data collections is consistent with the number of reference signal resources, and the number of data collections is 8. A total piece of to-be-collected information may be determined through the data collection requirement to be 32.

In addition, the second indication information indicates that the core network function supports the privatization capability; that is, the core network function supports generating a dataset using the first information, and the maximum quantity of data information supported by the core network function is 32. The data information may be considered as privatized information.

(32): The UE selects a target processing manner and determines a parameter for the target processing manner based on the second information, and the UE processes the 32 pieces of to-be-collected information based on the selected target processing manner and the parameter for the target processing manner to obtain data information.

The target processing manner may be used for privatization. Since the maximum quantity of data information supported by the core network function is 32, and the total piece of to-be-collected information determined based on the data collection requirement is 32, dimension expanding operations cannot be performed on the 32 pieces of to-be-collected information, which means that the target processing manner cannot include multidimensional mapping processing. For example, the selected target processing manner may include data bias processing and out-of-order processing, and the parameter for the target processing manner include a bias value for the data bias processing and a parameter for the out-of-order processing. The selection of the target processing manner and the corresponding parameter may be made by looking up a predefined table or based on a random number sent from the core network function.

(33) The UE sends the first information to the core network function. The first information includes a first identifier and data information. The first identifier is used to indicate a target processing manner and a parameter for the target processing manner.

The first identifier may be considered as a privatized identifier. The UE sends the privatized 32 pieces of data information and the first identifier to the core network function.

(34): The core network function generates a dataset based on the first identifier and data information with a same number of data bits from a plurality of UEs or a same UE. The dataset includes data information associated with the first identifier, and the data information included in the dataset has a same number of data bits.

### Embodiment 4

In this embodiment, the first device is UE, and the second device is a core network function. The dataset generation method includes procedures as follows.

(41): The core network function receives second information sent by the UE, the second information including first indication information and second indication information; where the first indication information is used to indicate a data collection requirement, and the second indication information is used to indicate a data processing capability of the UE for first information.

The data collection requirement indicated by the first indication information includes a data collection object and the number of data collections. The data collection object includes a horizontal beam pointing of the beam, a vertical beam pointing of the beam, a 3 dB beamwidth in the horizontal direction, and a 3 dB beamwidth in the vertical direction. The number of data collections is consistent with the number of requested reference signal resources, which is assumed to be 8. A total piece of to-be-collected information may be determined through the data collection requirement to be 32.

In addition, the second indication information indicates that the UE supports the privatization capability; that is, the UE supports generating a dataset using the first information, and the maximum quantity of data information supported by the UE is 1000. The data information may be considered as privatized information.

(42): The core network function selects a target processing manner and determines a parameter for the target processing manner based on the second information, and the core network function processes the 32 pieces of to-be-collected information based on the selected target processing manner and the parameter for the target processing manner to obtain data information.

The target processing manner may be used for privatization. Since the maximum quantity of data information supported by the UE is 1000, and the total piece of to-be-collected information determined based on the data collection requirement is 32, dimension expanding operations can be performed on the 32 pieces of to-be-collected information, which means that the target processing manner can include multidimensional mapping processing. For example, the selected target processing manner may include data bias processing, multidimensional mapping processing, and out-of-order processing, and the parameter for the target processing manner include a bias value for the data bias processing, a mapping manner for the multidimensional mapping processing, and a parameter for the out-of-order processing. The selection of the target processing manner and the corresponding parameter may be made by looking up a predefined table or based on a random number sent from the UE. For example, the multidimensional mapping processing involves expanding 1 piece of data to 3 pieces of data, and the core network function processes the 32 pieces of to-be-collected information based on the selected target processing manner and the parameter for the target processing manner to obtain 96 pieces of data information.

(43) The core network function sends the first information to the UE. The first information includes a first identifier and data information. The first identifier is used to indicate a target processing manner and a parameter for the target processing manner.

The first identifier may be considered as a privatized identifier. The core network function sends the privatized 96 pieces of data information and the first identifier to the UE.

(44): The UE generates a dataset based on the first identifier and data information with a same number of data bits from a plurality of core network functions or a same core network function. The dataset includes data information associated with the first identifier, and the data information included in the dataset has a same number of data bits.

Referring to FIG. 3, FIG. 3 is a flowchart of an information sending method according to an embodiment of this application. As shown in FIG. 3, the information sending method includes the following steps:
Step 201. A second device processes information related to device communication in a target processing manner to obtain data information; and
Step 202. The second device sends first information to a first device, where the first information includes a first identifier and the data information, the first identifier being used to indicate the target processing manner; where
the first information is used to generate a dataset, the dataset includes data information associated with the first identifier, the dataset is used for artificial intelligence AI model processing, and the AI model processing includes at least one of model inference of AI models, model training of AI models, and model monitoring of AI models.

Optionally, the processed AI model is configured to perform at least one of the following:
beam prediction, channel prediction, channel quality prediction, mobility management, or quality of experience QoE prediction.

Optionally, the information related to device communication includes beam information of the second device, the first information is associated with a reference signal resource, the dataset further includes channel quality information obtained from channel measurement based on the beam information of the second device, and the channel quality information is associated with the reference signal resource.

Optionally, the first device is a terminal, the second device is a network-side device, and the first information is sent through a measurement configuration; or
the first device is a network-side device, the second device is a terminal, and the first information is sent through a measurement report.

Optionally, before the second device sends the first information to the first device, the method further includes:
receiving, by the second device, second information sent by the first device, the second information including at least one of first indication information and second indication information; where
the first indication information is used to indicate a data collection requirement, and the second indication information is used to indicate a data processing capability of the first device for the first information.

Optionally, the data processing capability of the first device for the first information includes at least one of the following:
whether to support obtaining a dataset using the first information;
a maximum quantity of the data information supported; or
maximum and minimum numerical values supported for processing.

Optionally, the data collection requirement includes at least one of the following:
a data collection object; or
the number of data collections.

Optionally, the information related to device communication includes information about the data collection object.

Optionally, the data collection object includes at least one of the following:
a beam pointing;
a 3 dB beamwidth;
a beam gain;
an antenna pattern;
a terminal moving speed;
a terminal location;
a base station location;
cell line-of-sight LOS distribution;
cell non-line-of- sight NLOS distribution; or
an antenna configuration parameter.

Optionally, the target processing manner includes at least one of the following:
data bias processing;
data scaling processing;
function transformation processing;
multidimensional mapping processing; or
out-of-order processing.

It should be noted that this embodiment is a second device implementation corresponding to the embodiment shown in FIG. 2. For a specific implementation of this embodiment, refer to related descriptions of the embodiment shown in FIG. 2. To avoid repetition, details are not repeated in this embodiment. In this way, the dataset is generated from data information obtained by processing information related to device communication in a target processing manner, and the first device side acquires the data information processed in the target processing manner, so that sensitive information of the second device is not leaked on the first device side, and information security can be improved.

The dataset generation method provided in this embodiment of this application can be executed by a dataset generation apparatus. In this embodiment of this application, a dataset generation apparatus performing the dataset generation method is used as an example to describe the dataset generation apparatus provided in the embodiments of this application.

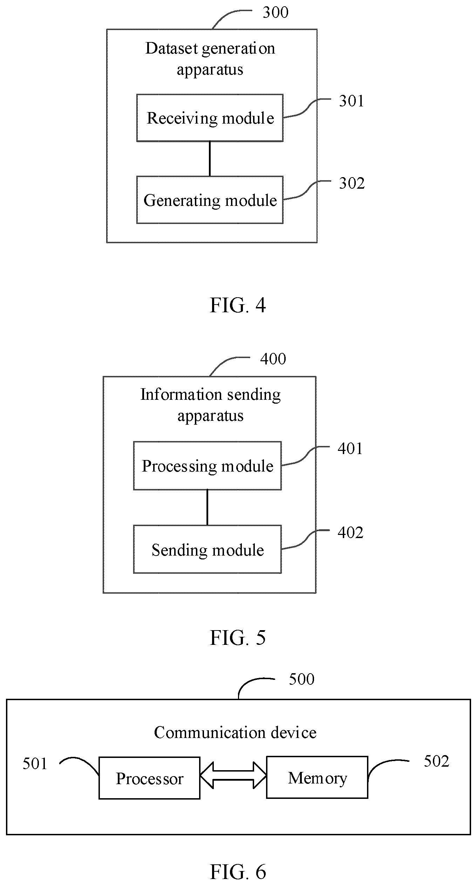

Referring to FIG. 4, FIG. 4 is a structural diagram of a dataset generation apparatus according to an embodiment of this application. A first device includes the dataset generation apparatus. As shown in FIG. 4, the dataset generation apparatus 300 includes:
a receiving module 301, configured to receive first information from a second device, where the first information includes a first identifier and data information, the data information being information obtained by processing information related to device communication in a target processing manner and the first identifier being used to indicate the target processing manner; and
a generating module 302, configured to generate a dataset based on the first identifier, where the dataset includes data information associated with the first identifier, the dataset is used for artificial intelligence AI model processing, and the AI model processing includes at least one of model inference of AI models, model training of AI models, and model monitoring of AI models.

Optionally, the generating module 302 is further configured to perform at least one of the following according to a processed AI model:
beam prediction, channel prediction, channel quality prediction, mobility management, or quality of experience QoE prediction.

Optionally, the information related to device communication includes beam information of the second device, and the apparatus further includes:
a determining module, configured to determine beam quality based on an AI model and the dataset.

Optionally, the information related to device communication includes beam information of the second device, the first information is associated with a reference signal resource, the dataset further includes channel quality information obtained from channel measurement based on the beam information of the second device, and the channel quality information is associated with the reference signal resource.

Optionally, the first device is a terminal, the second device is a network-side device, and the first information is sent through a measurement configuration; or
the first device is a network-side device, the second device is a terminal, and the first information is sent through a measurement report.

Optionally, the apparatus further includes:
a sending module, configured to send second information to the second device, the second information including at least one of first indication information and second indication information; where
the first indication information is used to indicate a data collection requirement, and the second indication information is used to indicate a data processing capability of the first device for the first information.

Optionally, the data processing capability of the first device for the first information includes at least one of the following:
whether to support generating a dataset using the first information;
a maximum quantity of the data information supported; or
maximum and minimum numerical values supported for processing.

Optionally, the data collection requirement includes at least one of the following:
a data collection object; or
the number of data collections.

Optionally, the information related to device communication includes information about the data collection object.

Optionally, the data collection object includes at least one of the following:
a beam pointing;
a 3 dB beamwidth;
a beam gain;
an antenna pattern;
a terminal moving speed;
a terminal location;
a base station location;
cell line-of-sight LOS distribution;
cell non-line-of- sight NLOS distribution; or
an antenna configuration parameter.

Optionally, the target processing manner includes at least one of the following:
data bias processing;
data scaling processing;
function transformation processing;
multidimensional mapping processing; or
out-of-order processing.

For the dataset generation apparatus in this embodiment of this application, the dataset is generated from data information obtained by processing information related to device communication in a target processing manner, and the first device side acquires the data information processed in the target processing manner, so that sensitive information of the second device is not leaked on the first device side, and information security can be improved.

The dataset generation apparatus in this embodiment of this application may be an electronic device such as an electronic device with an operating system, or a component in an electronic device such as an integrated circuit or chip. The electronic device may be a terminal or a device other than a terminal. For example, the terminal may include but is not limited to the types of the terminal 11 listed above, and the other device may be a server, a network attached storage (Network Attached Storage, NAS), or the like. This is not specifically limited in this embodiment of this application.

The dataset generation apparatus provided in this embodiment of this application can implement the processes implemented in the method embodiment of FIG. 2, with the same technical effects achieved. To avoid repetition, details are not repeated herein.

The information sending method provided in an embodiment of this application can be executed by an information sending apparatus. In an embodiment of this application, an information sending apparatus executing the information sending method is used as an example to describe the information sending apparatus provided in the embodiments of this application.

Referring to FIG. 5, FIG. 5 is a schematic structural diagram of an information sending apparatus according to an embodiment of this application. A second device includes the information sending apparatus. As shown in FIG. 5, the information sending apparatus 400 includes:
a processing module 401, configured to process information related to device communication in a target processing manner to obtain data information; and
a sending module 402, configured to send first information to a first device, where the first information includes a first identifier and the data information, the first identifier being used to indicate the target processing manner; where
the first information is used to generate a dataset, the dataset includes data information associated with the first identifier, the dataset is used for artificial intelligence AI model processing, and the AI model processing includes at least one of model inference of AI models, model training of AI models, and model monitoring of AI models.

Optionally, the processed AI model is configured to perform at least one of the following:
beam prediction, channel prediction, channel quality prediction, mobility management, or quality of experience QoE prediction.

Optionally, the information related to device communication includes beam information of the second device, the first information is associated with a reference signal resource, the dataset further includes channel quality information obtained from channel measurement based on the beam information of the second device, and the channel quality information is associated with the reference signal resource.

Optionally, the first device is a terminal, the second device is a network-side device, and the first information is sent through a measurement configuration; or
the first device is a network-side device, the second device is a terminal, and the first information is sent through a measurement report.

Optionally, the apparatus further includes:
a receiving module, configured to receive second information sent by the first device, the second information including at least one of first indication information and second indication information; where
the first indication information is used to indicate a data collection requirement, and the second indication information is used to indicate a data processing capability of the first device for the first information.

Optionally, the data processing capability of the first device for the first information includes at least one of the following:
whether to support obtaining a dataset using the first information;
a maximum quantity of the data information supported; or
maximum and minimum numerical values supported for processing.

Optionally, the data collection requirement includes at least one of the following:
a data collection object; or
the number of data collections.

Optionally, the information related to device communication includes information about the data collection object.

Optionally, the data collection object includes at least one of the following:
a beam pointing;
a 3 dB beamwidth;
a beam gain;
an antenna pattern;
a terminal moving speed;
a terminal location;
a base station location;
cell line-of-sight LOS distribution;
cell non-line-of- sight NLOS distribution; or
an antenna configuration parameter.

Optionally, the target processing manner includes at least one of the following:
data bias processing;
data scaling processing;
function transformation processing;
multidimensional mapping processing; or
out-of-order processing.

For the information sending apparatus in this embodiment of this application generates the dataset using data information obtained by processing information related to device communication in a target processing manner, and the first device side acquires the data information processed in the target processing manner, so that sensitive information of the second device is not leaked on the first device side, and information security can be improved.

The information sending apparatus in this embodiment of this application may be an electronic device such as an electronic device with an operating system, or a component in an electronic device such as an integrated circuit or chip. The electronic device may be a terminal or a device other than a terminal. For example, the terminal may include but is not limited to the types of the terminal 11 listed above, and the other device may be a server, a network attached storage (Network Attached Storage, NAS), or the like. This is not specifically limited in this embodiment of this application.

The information sending apparatus provided in this embodiment of this application can implement the processes implemented by the method embodiment in FIG. 3, with the same technical effects achieved. To avoid repetition, details are not repeated herein.

Optionally, as shown in FIG. 6, an embodiment of this application further provides a communication device 500 including a processor 501 and a memory 502. The memory 502 has stored thereon a program or instruction capable of running on the processor 501. For example, when the communication device 500 is a first device, the program or instruction is executed by the processor 501 to implement the steps of the foregoing embodiment of the dataset generation method, with the same technical effects achieved. When the communication device 500 is a second device, the program or instruction is executed by the processor 501 to implement the processes in the foregoing embodiment of the information sending method, with the same technical effects achieved. To avoid repetition, details are not repeated herein.

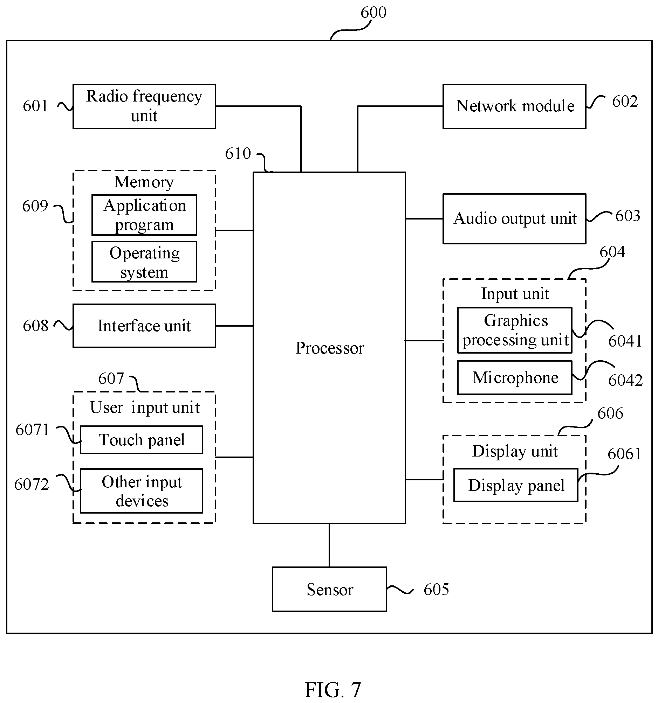

An embodiment of this application further provides a terminal including a processor and a communication interface. In a case that the terminal is a first device, the communication interface is configured to receive first information from a second device, where the first information includes a first identifier and data information, the data information being information obtained by processing information related to device communication in a target processing manner and the first identifier being used to indicate the target processing manner. The processor is configured to generate a dataset based on the first identifier, where the dataset includes data information associated with the first identifier, the dataset is used for artificial intelligence AI model processing, and the AI model processing includes at least one of model inference of AI models, model training of AI models, and model monitoring of AI models. In a case that the terminal is the second device, the processor is configured to obtain data information by processing information related to device communication in a target processing manner. The communication interface is configured to send first information to a first device, where the first information includes a first identifier and the data information, the first identifier being used to indicate the target processing manner. The first information is used to generate a dataset, where the dataset includes data information associated with the first identifier, the dataset is used for artificial intelligence AI model processing, and the AI model processing includes at least one of model inference of AI models, model training of AI models, and model monitoring of AI models. This terminal embodiment corresponds to the foregoing embodiment of the dataset generation method or information sending method. All processes and implementations in the foregoing embodiment of the dataset generation method or information sending method are applicable to this terminal embodiment, with the same technical effects achieved. Specifically, FIG. 7 is a schematic diagram of a hardware structure of a terminal implementing embodiments of this application.

The terminal 600 includes but is not limited to at least part of these components: a radio frequency unit 601, a network module 602, an audio output unit 603, an input unit 604, a sensor 605, a display unit 606, a user input unit 607, an interface unit 608, a memory 609, and a processor 610.

Persons skilled in the art can understand that the terminal 600 may further include a power supply (for example, a battery) supplying power to the components, and the power supply may be logically connected to the processor 610 through a power management system. In this way, functions such as charge management, discharge management, and power consumption management are implemented by using the power management system. The structure of the terminal shown in FIG. 7 does not constitute any limitation on the terminal, and the terminal may include more or fewer components than shown in the figure, or combine some components, or have different component arrangements. Details are not described herein.

It can be understood that in this embodiment of this application, the input unit 604 may include a graphics processing unit (Graphics Processing Unit, GPU) 6041 and a microphone 6042. The graphics processing unit 6041 processes image data of a still picture or video obtained by an image capture apparatus (for example, a camera) in a video capture mode or an image capture mode. The display unit 606 may include a display panel 6061, and the display panel 6061 may be configured in a form of a liquid crystal display, an organic light-emitting diode, and the like. The user input unit 607 includes at least one of a touch panel 6071 and other input devices 6072. The touch panel 6071 is also referred to as a touchscreen. The touch panel 6071 may include two parts: a touch detection apparatus and a touch controller. The other input devices 6072 may include but are not limited to a physical keyboard, a function key (for example, a volume control key or a power on/off key), a trackball, a mouse, and a joystick. Details are not described herein.

In an embodiment of this application, the radio frequency unit 601 receives downlink data from a network-side device and transmits the data to the processor 610 for processing; and the radio frequency unit 601 can additionally send uplink data to the network-side device. Generally, the radio frequency unit 601 includes but is not limited to an antenna, an amplifier, a transceiver, a coupler, a low noise amplifier, and a duplexer.

The memory 609 may be configured to store software programs or instructions and various data. The memory 609 may primarily include a first storage area for storing programs or instructions and a second storage area for storing data. The first storage area may store an operating system, an application program or instructions required by at least one function (for example, a sound playback function or an image playback function), and the like. In addition, the memory 609 may include a volatile memory or a non-volatile memory, or the memory 609 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in this embodiment of this application includes but is not be limited to these or any other applicable types of memories.

The processor 610 may include one or more processing units. Optionally, the processor 610 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 610.

In a case that the terminal is a first device:
the radio frequency unit 601 is configured to receive first information from a second device, where the first information includes a first identifier and data information, the data information being information obtained by processing information related to device communication in a target processing manner and the first identifier being used to indicate the target processing manner; and
the processor 610 is configured to generate a dataset based on the first identifier, where the dataset includes data information associated with the first identifier, the dataset is used for artificial intelligence AI model processing, and the AI model processing includes at least one of model inference of AI models, model training of AI models, and model monitoring of AI models.

Optionally, the processor 610 is further configured to perform at least one of the following according to a processed AI model:
beam prediction, channel prediction, channel quality prediction, mobility management, or quality of experience QoE prediction.

Optionally, the information related to device communication includes beam information of the second device.

The processor 610 is further configured to determine beam quality based on an AI model and the dataset.

Optionally, the information related to device communication includes beam information of the second device, the first information is associated with a reference signal resource, the dataset further includes channel quality information obtained from channel measurement based on the beam information of the second device, and the channel quality information is associated with the reference signal resource.

Optionally, the first device is a terminal, the second device is a network-side device, and the first information is sent through a measurement configuration; or
the first device is a network-side device, the second device is a terminal, and the first information is sent through a measurement report.

Optionally, the radio frequency unit 601 is further configured to send second information to the second device, the second information including at least one of first indication information and second indication information; where
the first indication information is used to indicate a data collection requirement, and the second indication information is used to indicate a data processing capability of the first device for the first information.

Optionally, the data processing capability of the first device for the first information includes at least one of the following:
whether to support generating a dataset using the first information;
a maximum quantity of the data information supported; or
maximum and minimum numerical values supported for processing.

Optionally, the data collection requirement includes at least one of the following:
a data collection object; or
the number of data collections.

Optionally, the information related to device communication includes information about the data collection object.

Optionally, the data collection object includes at least one of the following:
a beam pointing;
a 3 dB beamwidth;
a beam gain;
an antenna pattern;
a terminal moving speed;
a terminal location;
a base station location;
cell line-of-sight LOS distribution;
cell non-line-of- sight NLOS distribution; or
an antenna configuration parameter.

Optionally, the target processing manner includes at least one of the following:
data bias processing;
data scaling processing;
function transformation processing;
multidimensional mapping processing; or
out-of-order processing.

In a case that the terminal is a second device:
the processor 610 is configured to process information related to device communication in a target processing manner to obtain data information; and
the radio frequency unit 601 is configured to send first information to a first device, where the first information includes a first identifier and the data information, the first identifier being used to indicate the target processing manner; where
the first information is used to generate a dataset, the dataset includes data information associated with the first identifier, the dataset is used for artificial intelligence AI model processing, and the AI model processing includes at least one of model inference of AI models, model training of AI models, and model monitoring of AI models.

Optionally, the processed AI model is configured to perform at least one of the following:
beam prediction, channel prediction, channel quality prediction, mobility management, or quality of experience QoE prediction.

Optionally, the information related to device communication includes beam information of the second device, the first information is associated with a reference signal resource, the dataset further includes channel quality information obtained from channel measurement based on the beam information of the second device, and the channel quality information is associated with the reference signal resource.

Optionally, the first device is a terminal, the second device is a network-side device, and the first information is sent through a measurement configuration; or
the first device is a network-side device, the second device is a terminal, and the first information is sent through a measurement report.

Optionally, the radio frequency unit 601 is further configured to receive second information sent by the first device, the second information including at least one of first indication information and second indication information; where
the first indication information is used to indicate a data collection requirement, and the second indication information is used to indicate a data processing capability of the first device for the first information.

Optionally, the data processing capability of the first device for the first information includes at least one of the following:
whether to support obtaining a dataset using the first information;
a maximum quantity of the data information supported; or
maximum and minimum numerical values supported for processing.

Optionally, the data collection requirement includes at least one of the following:
a data collection object; or
the number of data collections.

Optionally, the information related to device communication includes information about the data collection object.

Optionally, the data collection object includes at least one of the following:
a beam pointing;
a 3 dB beamwidth;
a beam gain;
an antenna pattern;
a terminal moving speed;
a terminal location;
a base station location;
cell line-of-sight LOS distribution;
cell non-line-of- sight NLOS distribution; or
an antenna configuration parameter.

Optionally, the target processing manner includes at least one of the following:
data bias processing;
data scaling processing;
function transformation processing;
multidimensional mapping processing; or
out-of-order processing.

An embodiment of this application further provides a network-side device including a processor and a communication interface. In a case that the network-side device is a first device, the communication interface is configured to receive first information from a second device, where the first information includes a first identifier and data information, the data information being information obtained by processing information related to device communication in a target processing manner and the first identifier being used to indicate the target processing manner. The processor is configured to generate a dataset based on the first identifier, where the dataset includes data information associated with the first identifier, the dataset is used for artificial intelligence AI model processing, and the AI model processing includes at least one of model inference of AI models, model training of AI models, and model monitoring of AI models. In a case that the network-side device is the second device, the processor is configured to obtain data information by processing information related to device communication in a target processing manner. The communication interface is configured to send first information to a first device, where the first information includes a first identifier and the data information, the first identifier being used to indicate the target processing manner. The first information is used to generate a dataset, where the dataset includes data information associated with the first identifier, the dataset is used for artificial intelligence AI model processing, and the AI model processing includes at least one of model inference of AI models, model training of AI models, and model monitoring of AI models. This network-side device embodiment corresponds to the foregoing embodiment of the dataset generation method or information sending method. All processes and implementations in the foregoing embodiment of the dataset generation method or information sending method are applicable to this network-side device embodiment, with the same technical effects achieved.

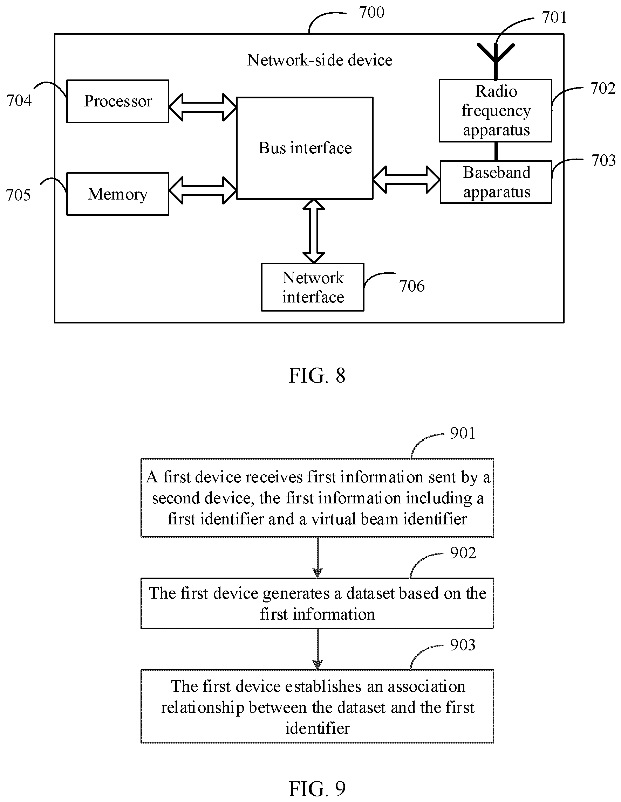

Specifically, an embodiment of this application further provides a network-side device. As shown in FIG. 8, the network-side device 700 includes an antenna 701, a radio frequency apparatus 702, a baseband apparatus 703, a processor 704, and a memory 705. The antenna 701 is connected to the radio frequency apparatus 702. In uplink, the radio frequency apparatus 702 receives information through the antenna 701, and sends the received information to the baseband apparatus 703 for processing. In downlink, the baseband apparatus 703 processes to-be-sent information, and sends the information to the radio frequency apparatus 702; and the radio frequency apparatus 702 processes the received information and then sends the information out through the antenna 701.

The method performed by the network-side device in the foregoing embodiment may be implemented on the baseband apparatus 703. The baseband apparatus 703 includes a baseband processor.

The baseband apparatus 703 may include, for example, at least one baseband processing unit, where a plurality of chips are disposed on the baseband processing unit. As shown in FIG. 8, one of the chips is, for example, a baseband processor, and connected to the memory 705 through a bus interface, to invoke the program in the memory 705 to perform the operations of the network device shown in the foregoing method embodiment.

The network-side device may further include a network interface 706, where the interface is, for example, a common public radio interface (common public radio interface, CPRI).

Specifically, the network-side device 700 in this embodiment of the this application further includes: an instruction or program stored in the memory 705 and executable on the processor 704. The processor 704 invokes the instruction or program in the memory 705 to perform the method performed by the modules shown in FIG. 4 or 5, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiment of the dataset generation method or information sending method are implemented, with the same technical effects achieved. To avoid repetition, details are not repeated herein.

The processor is a processor in the terminal in the foregoing embodiment. The readable storage medium may be non-volatile or non-transient. The readable storage medium may include a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction, to implement the processes of the foregoing embodiment of the dataset generation method or information sending method, with the same technical effects achieved. To avoid repetition, details are not repeated herein.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing embodiment of the dataset generation method or information sending method, with the same technical effects achieved. To avoid repetition, details are not repeated herein.

An embodiment of this application further provides a dataset generation system, including a first device and a second device. The first device may be configured to perform the steps of the dataset generation method, and the second device may be configured to perform the steps of the information sending method.

### Second embodiment

In millimeter wave wireless communication, multiple analog beams are configured at both the receiver and transmitter of the communication (for example, at the base station and at the UE). For a same UE, the channel quality is measured to be variable at different transmit and receive analog beams. How to quickly and accurately identify a transmit-receive beam pair with the highest channel quality from all possible combinations of transmit and receive analog beam pairs is a key factor affecting transmission quality. After the introduction of an artificial intelligence (Artificial Intelligence, AI) neural network model, the terminal can effectively predict a transmit-receive analog beam pair with the highest channel quality based on historical channel quality information and report it to a network side.

In beam pair prediction, beam pointing is considered relatively sensitive information. Currently, it remains unclear how to implement data collection without exposing the beam pointing.

To solve the problem of how to implement data collection without exposing the beam pointing, embodiments of this application provide a data collection and processing method, a device, and a readable storage medium.

The following describes in detail a data collection method provided in embodiments of this application through some embodiments and application scenarios thereof with reference to the accompanying drawings.

Referring to FIG. 9, an embodiment of this application provides a data collection method. The method is executed by a first device, and the first device may be a terminal, an access network device, or a core network device. The method includes:
Step 901. The first device receives first information sent by a second device, the first information including a first identifier and a virtual beam identifier;
Step 902. The first device generates a dataset based on the first information; and
Step 903. The first device establishes an association relationship between the dataset and the first identifier; where
the first identifier is an identifier of a first relationship, and the first relationship is a mapping relationship between a beam pointing of the second device and the virtual beam identifier.

In this embodiment of this application, the first device is a device that performs data collection, where the collected data is used by the user for subsequent training or inference of AI models, and the first device may be referred to as a data collection device; and the second device cooperates with the first device and is configured to provide beam pointing information to the first device, where the beam pointing information needs to be privatized in the second device for the sake of data security and then is provided to the first device, and the second device may be referred to as a device for privatizing beam pointing information.

It should be noted that in the technical solution of this application, a manner to privatize the beam pointing refers to a capability to process virtual beam identifiers. A specific mapping relationship is identified by a first identifier. Therefore, only virtual beam identifiers are exchanged between the first device and the second device, rather than the actual beam pointing information. With the establishment of an association relationship between the dataset and the first identifier, a mapping between the privatization method and the dataset is established, so that the corresponding privatization method may also be used for data processing with respect to the input, output, or labeled data during subsequent AI model training or inference.

In this embodiment of this application, the first device receives first information sent by the second device and including a first identifier and a virtual beam identifier, generates a dataset based on the first information, and establishes an association relationship between the dataset and the first identifier, where the first identifier is an identifier of a first relationship, and the first relationship is a mapping relationship between a beam pointing of the second device and the virtual beam identifier. In this way, an actual beam pointing is mapped to a virtual beam identifier, and the virtual beam identifier is used as an input, output, or labeled data for subsequent AI model training and/or inference, enabling data collection without exposing beam pointing.

In a possible implementation, the first device generating a dataset based on the first information includes:
generating, by the first device, the dataset based on the virtual beam identifier in the first information corresponding to the same first identifier.

In this embodiment of this application, considering that the first device may acquire data from one or more second devices, data merging is performed for scenarios involving data collection from multiple second devices, resulting in a dataset. Specifically, the first information corresponding to the same first identifier refers to: multiple sets of virtual beam identifiers obtained by the first device from multiple second devices. These virtual beam identifiers are all derived from mapping based on the actual beam pointing. The mapping manner used for these multiple sets of virtual beam identifiers is the same, that is, following the same mapping rule. Therefore, the first device can merge these multiple sets of virtual beam identifiers into a single dataset for unified processing.

In a possible implementation, before the first device receives first information sent by the second device, the method further includes:
sending, by the first device, second information and a first capability to the second device; where
the second information is used to request the second device to provide beam pointing information, and the first capability is a capability of the first device to process a virtual beam identifier.

In this embodiment of this application, before the second device provides the virtual beam identifier to the first device, the first device needs to send a request to the second device to request the second device to provide data. In addition, the first device needs to inform the second device of its capability to process virtual beam identifiers, ensuring that the first device can process the virtual beam identifiers subsequently provided by the second device.

In a possible implementation, the first capability includes one or more of the following:
(1) whether the first device supports a capability for processing virtual beam identifiers; and
(2) a maximum numerical value of the virtual beam identifier supported by the first device.

In a possible implementation, in a case that the first device is a terminal and the second device is a network device, the first identifier is carried in a measurement configuration, and the measurement configuration is associated with a reference signal resource.

In a case that the first device is a network device and the second device is a terminal, the first identifier is carried in a measurement report, and the measurement report is associated with a reference signal resource and beam quality.

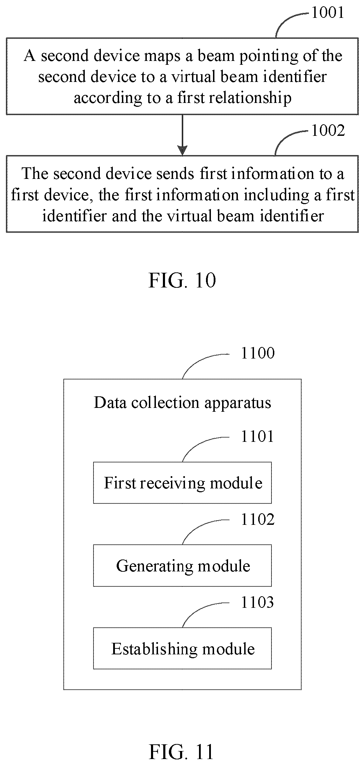

Referring to FIG. 10, an embodiment of this application provides a data processing method. The method is executed by a second device, and the second device may be a terminal, an access network device, or a core network device. The method includes:
Step 1001. The second device maps a beam pointing of the second device to a virtual beam identifier according to a first relationship; and
Step 1002. The second device sends first information to a first device, the first information including a first identifier and the virtual beam identifier; where
the first identifier is an identifier of a first relationship, and the first relationship is a mapping relationship between a beam pointing of the second device and the virtual beam identifier.

In this embodiment of this application, the first device is a device that performs data collection, where the collected data is used by the user for subsequent training or inference of AI models, and the first device may be referred to as a data collection device; and the second device cooperates with the first device and is configured to provide beam pointing information to the first device, where the beam pointing information needs to be privatized in the second device for the sake of data security and then is provided to the first device, and the second device may be referred to as a device for privatizing beam pointing information.

It should be noted that in the technical solution of this application, a manner to privatize the beam pointing is to map a beam pointing to a virtual beam identifier. A specific mapping relationship is identified by a first identifier. Therefore, only virtual beam identifiers are exchanged between the first device and the second device, rather than the actual beam pointing information.

In this embodiment of this application, the first device receives first information sent by the second device and including a first identifier and a virtual beam identifier, generates a dataset based on the first information, and establishes an association relationship between the dataset and the first identifier, where the first identifier is an identifier of a first relationship, and the first relationship is a mapping relationship between a beam pointing of the second device and the virtual beam identifier. In this way, an actual beam pointing is mapped to a virtual beam identifier, and the virtual beam identifier is used as an input, output, or labeled data for subsequent AI model training and/or inference, enabling data collection without exposing beam pointing.

In a possible implementation, before the second device sends the first information to the first device, the method further includes:
receiving, by the second device, second information and a first capability sent by the first device; where
the second information is used to request the second device to provide beam pointing information, and the first capability is a capability of the first device to process a virtual beam identifier.

In this embodiment of this application, before the second device provides the virtual beam identifier to the first device, the first device needs to send a request to the second device to request the second device to provide data. In addition, the first device needs to inform the second device of its capability to process virtual beam identifiers, ensuring that the first device can process the virtual beam identifiers subsequently provided by the second device.

In a possible implementation, the first capability includes one or more of the following:
(1) whether the first device supports a capability for processing virtual beam identifiers; and
(2) a maximum numerical value of the virtual beam identifier supported by the first device.

In a possible implementation, in a case that the first device is a terminal and the second device is a network device, the first identifier is carried in a measurement configuration, and the measurement configuration is associated with a reference signal resource.

In a case that the first device is a network device and the second device is a terminal, the first identifier is carried in a measurement report, and the measurement report is associated with a reference signal resource and beam quality.

It should be noted that in practical application scenarios, a specific device may be used as a data collection device or as device for privatizing beam pointing information. In other words, the device can be used as a first device to perform the foregoing processing operations of FIG. 9, or as a second device to perform the foregoing processing operations of FIG. 10.

For example, consider a pair of a base station and a terminal. In one case, the base station serves as the first device, and the terminal serves as the second device. Specifically, the terminal sends a virtual beam identifier to the base station, and then the base station generates a dataset based on the virtual beam identifier. In another case, the terminal serves as the first device, and the base station serves as the second device. Specifically, the base station sends a virtual beam identifier to the terminal, and then the terminal generates a dataset based on the virtual beam identifier.

The following describes technical solutions of this application with reference to specific embodiments.

### Embodiment one: Mapping method 1 of a first relationship

Assuming that a first device is UE and a second device is a base station.

The mapping relationship of the first relationship on the base station side is as shown in Table 3:

**Table 3**

| Beam horizontal pointing | beam vertical pointing | Virtual beam identifier |
|---|---|---|
| -70 | 22.5 | 0 |
| -70 | 110.5 | 1 |
| -20 | 22.5 | 2 |
| -20 | 110.5 | 3 |
| 20 | 22.5 | 4 |
| 20 | 110.5 | 5 |
| 70 | 22.5 | 6 |
| 70 | 110.5 | 7 |

The base station side can determine the first mapping relationship based on the first relationship mapping identifier (that is, the first identifier).

For example, if the base station uses transmit beam 1 (with a horizontal pointing of -20 and a vertical pointing of 110.5), the transmitted virtual beam has an identifier of 3.

In this embodiment, the horizontal pointing and vertical pointing corresponding to a beam serve as a set of information and correspond to one virtual beam identifier.

### Embodiment two: Mapping method 2 of a first relationship

Assuming that a first device is UE and a second device is a base station.

The first relationship mapping on the base station side is defined by two mapping tables: a horizontal beam pointing mapping table (Table 4) and a vertical beam pointing mapping table (Table 5).

**Table 4**

| Beam horizontal pointing | Virtual beam identifier 1 |
|---|---|
| -70 | 0 |
| -20 | 1 |
| 20 | 2 |
| 70 | 3 |

**Table 5**

| Beam vertical pointing | Virtual beam identifier 2 |
|---|---|
| 22.5 | 0 |
| 110.5 | 1 |

The base station side can determine the first mapping relationship based on the first relationship mapping identifier (that is, the first identifier).

If the base station uses transmit beam 1 (with a horizontal pointing of -20 and a vertical pointing of 110.5), the virtual beam identifier is (1, 1).

Embodiment three: The first device is a base station (for data collection), and the second device is UE (for beam privatization).

Step 1: The base station sends second information and a first capability to the UE, where
the second information is auxiliary information, that is, a data collection requirement, containing beam pointing information, and, specifically, includes a horizontal beam pointing and a vertical beam pointing. The number of acquisitions is consistent with the number of reference signal resources. Assuming that there are 8 reference signal resources, it is required to feed back receive beam pointing information of the UE corresponding to the 8 reference signal resources.

The first capability is a capability of the base station to process virtual beam identifiers. For example, a data collection and sample generation capability for virtual beam identifiers may be supported.

Step 2: The UE determines a privatization method based on the second information and the first capability, for example, mapping the beam pointing to a virtual beam identifier. Eight receive beam pointings are mapped to obtain 8 virtual beam identifiers.

Step 3: The UE sends the beam pointing mapping identifier (that is, the first identifier) and the 8 virtual beam identifiers to the base station. For example, in a measurement report, the beam pointing mapping identifiers plus the virtual beam identifiers are associated with the reference signal resources plus the beam quality. The beam pointing mapping identifiers may be in a one-to-many mapping relationship with the virtual beam identifiers, the beam pointing mapping identifiers may be in a one-to-many mapping relationship with the reference signal resources plus the beam quality, and the virtual beam identifiers are in a one-to-one mapping relationship with the reference signal resources plus the beam quality.

Step 4: The base station combines data from multiple UEs or a same UE with a same beam pointing mapping identifier to generate a dataset. The base station associates the generated dataset with the beam pointing mapping identifier. Optionally, the dataset may also include mapping information of the beam pointing on the base station side, such as a virtual beam identifier on the base station side. An identifier of the mapping method is denoted as a second identifier.

Step 5: The base station generates an AI model based on the dataset training and associates the AI model with the first identifier.

Step 6: The base station sends the association relationship between the AI model and the first identifier to the UE participating in the training, and the UE stores the association relationship locally or on a UE server. Optionally, if the dataset of step 4 also includes mapping processing information of beam information on the base station side, the base station stores an association relationship between the AI model and the second identifier locally or on a base station server.

Embodiment four: The first device is UE (for data collection), and the second device is a base station (for beam privatization).

Step 1: The UE sends second information and a first capability to the base station, where
the second information is auxiliary information, that is, an acquisition requirement, containing beam pointing information, and, specifically, includes a horizontal beam pointing and a vertical beam pointing. The number of acquisitions is consistent with the number of reference signal resources. Assuming that there are 8 reference signal resources, it is required to send receive beam pointing information of the base station corresponding to the 8 reference signal resources.

The first capability is a capability of the UE to process virtual beam identifiers. For example, a data collection and sample generation capability for virtual beam identifiers may be supported.

Step 2: The base station determines a privatization method based on the second information and the first capability, for example, mapping the beam pointing to a virtual beam identifier. Eight transmit beam pointings are mapped to obtain 8 virtual beam identifiers.

Step 3: The base station sends the beam pointing mapping identifier (that is, the first identifier) and the 8 virtual beam identifiers to the UE. For example, in a measurement configuration, the beam pointing mapping identifiers plus the virtual beam identifiers are associated with the reference signal resources.

The beam pointing mapping identifiers may be in a one-to-many mapping relationship with the virtual beam identifiers, the beam pointing mapping identifiers may be in a one-to-many mapping relationship with the reference signal resources, and the virtual beam identifiers are in a one-to-one mapping relationship with the reference signal resources.

Step 4: The UE combines data from multiple base stations or a same base station with a same beam pointing mapping identifier to generate a dataset. The UE associates the generated dataset with the beam pointing mapping identifier. Optionally, the dataset may also include mapping information of the beam pointing on the UE side, such as a virtual beam identifier on the UE side. An identifier of the mapping method is denoted as a second identifier.

Step 5: The UE generates an AI model based on the dataset training and associates the AI model with the first identifier.

Step 6: The UE sends the association relationship between the AI model and the first identifier to the base station participating in the training, and the base station stores the association relationship locally or on a base station server. Optionally, if the dataset of step 4 also includes mapping processing information of the beam information on the UE side, the UE stores an association relationship between the AI model and the second identifier locally or on a UE server.

Embodiment five: The first device is a core network device (for data collection), and the second device is UE (for beam privatization).

Step 1: The core network device sends second information and a first capability to the UE, where
the second information is auxiliary information, that is, an acquisition requirement, containing beam pointing information, and, specifically, includes a horizontal beam pointing and a vertical beam pointing. The number of acquisitions is consistent with the number of reference signal resources. Assuming that there are 8 reference signal resources, it is required to feed back receive beam pointing information of the UE corresponding to the 8 reference signal resources.

The first capability is a capability of the core network device to process virtual beam identifiers. For example, a data collection and sample generation capability for virtual beam identifiers may be supported.

Step 2: The UE determines a privatization method based on the second information and the first capability, for example, mapping the beam pointing to a virtual beam identifier. Eight receive beam pointings are mapped to obtain 8 virtual beam identifiers.

Step 3: The UE sends the beam pointing mapping identifier (that is, the first identifier) and the 8 virtual beam identifiers to a base station, and the base station forwards them to the core network device. For example, in a measurement report sent to the base station, the beam pointing mapping identifiers plus the virtual beam identifiers are associated with the reference signal resources plus the beam quality.

The beam pointing mapping identifiers may be in a one-to-many mapping relationship with the virtual beam identifiers, the beam pointing mapping identifiers may be in a one-to-many mapping relationship with the reference signal resources plus the beam quality, and the virtual beam identifiers are in a one-to-one mapping relationship with the reference signal resources plus the beam quality.

Step 4: The core network device combines data from multiple UEs or a same UE with a same beam pointing mapping identifier to generate a dataset. The core network device associates the generated dataset with the beam pointing mapping identifier. Optionally, the dataset may also include mapping information of the beam pointing on the base station side, such as a virtual beam identifier on the base station side. An identifier of the mapping method is denoted as a second identifier.

Step 5: The core network device generates an AI model based on the dataset training and associates the AI model with the first identifier. Optionally, the dataset may also include mapping processing information of beam information on the base station side, such as a virtual beam identifier on the base station side. Then the core network device associates the AI model with the first identifier and the second identifier and stores the association relationship locally or in another core network device.

Step 6: The core network device sends the association relationship between the AI model and the first identifier to the UE participating in the training, and the UE stores the association relationship locally or on a UE server. Optionally, if the dataset of step 4 also includes mapping processing information of beam information on the base station side, the core network device sends the association relationship between the AI model and the second identifier to a base station participating in the training, and the base station stores the association relationship between the AI model and the second identifier locally or on a base station server.

Embodiment six: The first device is UE (for data collection), and the second device is a core network device (for beam privatization).

Step 1: The UE sends second information and a first capability to the core network device, where
the second information is auxiliary information, that is, a data collection requirement, containing beam pointing information, and, specifically, includes a horizontal beam pointing and a vertical beam pointing. The number of acquisitions is consistent with the number of reference signal resources. Assuming that there are 8 reference signal resources, it is required to send receive beam pointing information of the base station corresponding to the 8 reference signal resources.

The first capability is a capability of the UE to process virtual beam identifiers. For example, a data collection and sample generation capability for virtual beam identifiers may be supported.

Step 2: The core network device determines a privatization method based on the second information and the first capability, for example, mapping the beam pointing to a virtual beam identifier. Eight transmit beam pointings are mapped to obtain 8 virtual beam identifiers.

Step 3: The core network device sends the beam pointing mapping identifier (that is, the first identifier) and the 8 virtual beam identifiers to the UE through a base station. For example, in a measurement configuration, the beam pointing mapping identifiers plus the virtual beam identifiers are associated with the reference signal resources.

Step 4: The UE combines data from multiple core network devices or a same core network device with a same beam pointing mapping identifier to generate a dataset. The UE associates the generated dataset with the beam pointing mapping identifier. Optionally, the dataset may also include mapping information of the beam pointing on the UE side, such as a virtual beam identifier on the UE side. An identifier of the mapping method is denoted as a second identifier.

Step 5: The UE generates an AI model based on the dataset training and associates the AI model with the first identifier.

Step 6: The UE sends the association relationship between the AI model and the first identifier to the core network device participating in the training, and the core network device stores the association relationship locally or on another core network device. Optionally, if the dataset of step 4 also includes mapping processing information of the beam information on the UE side, the UE stores an association relationship between the AI model and the second identifier locally or on a UE server.

The data collection method provided in this embodiment of this application can be executed by a data collection apparatus. In an embodiment of this application, a data collection apparatus performing the data collection method is used as an example to describe the data collection apparatus provided in the embodiments of this application.

Referring to FIG. 11, an embodiment of this application provides a data collection apparatus 1100, where the apparatus is applied to a first device, and the apparatus includes:
a first receiving module 1101, configured for the first device to receive first information sent by a second device, the first information including a first identifier and a virtual beam identifier;
a generating module 1102, configured for the first device to generate a dataset based on the first information; and
an establishing module 1103, configured for the first device to establish an association relationship between the dataset and the first identifier; where
the first identifier is an identifier of a first relationship, and the first relationship is a mapping relationship between a beam pointing of the second device and the virtual beam identifier.

Optionally, the generating module is configured for:
the first device to generate the dataset based on the virtual beam identifier in the first information corresponding to the same first identifier.

Optionally, the apparatus further includes:
a first sending module, configured for the first device to send second information and a first capability to a second device before the first device receives first information sent by the second device; where
the second information is used to request the second device to provide beam pointing information, and the first capability is a capability of the first device to process a virtual beam identifier.

Optionally, the first capability includes one or more of the following:
whether the first device supports a capability for processing virtual beam identifiers; and
a maximum numerical value of the virtual beam identifier supported by the first device.

Optionally, in a case that the first device is a terminal and the second device is a network device, the first identifier is carried in a measurement configuration, and the measurement configuration is associated with a reference signal resource; and
in a case that the first device is a network device and the second device is a terminal, the first identifier is carried in a measurement report, and the measurement report is associated with a reference signal resource and beam quality.

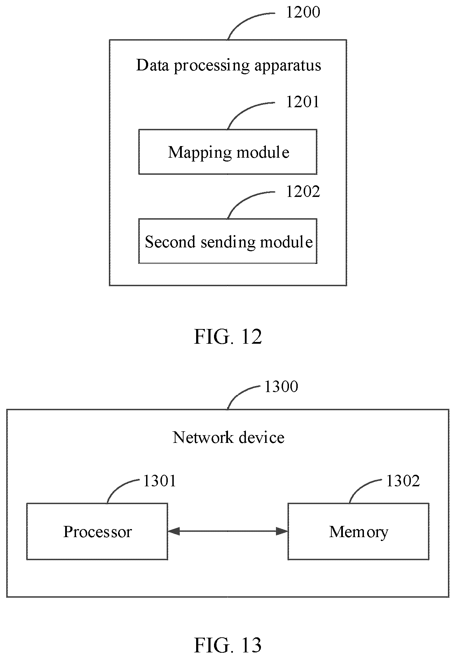

Referring to FIG. 12, an embodiment of this application provides a data processing apparatus 1200, where the apparatus is applied to a second device, including:
a mapping module 1201, configured for the second device to map a beam pointing of the second device to a virtual beam identifier according to a first relationship; and
a second sending module 1202, configured for the second device to send first information to a first device, the first information including a first identifier and the virtual beam identifier; where
the first identifier is an identifier of a first relationship, and the first relationship is a mapping relationship between a beam pointing of the second device and the virtual beam identifier.

Optionally, the apparatus further includes:
a second receiving module, configured for the second device to receive second information and a first capability sent by the first device before the second device sends first information to the first device; where
the second information is used to request the second device to provide beam pointing information, and the first capability is a capability of the first device to process a virtual beam identifier.

Optionally, the first capability includes one or more of the following:
whether the first device supports a capability for processing virtual beam identifiers; and
a maximum numerical value of the virtual beam identifier supported by the first device.

Optionally, in a case that the first device is a terminal and the second device is a network device, the first identifier is carried in a measurement configuration, and the measurement configuration is associated with a reference signal resource; and
in a case that the first device is a network device and the second device is a terminal, the first identifier is carried in a measurement report, and the measurement report is associated with a reference signal resource and beam quality.

The data processing apparatus in this embodiment of this application may be an electronic device such as an electronic device with an operating system, or a component in an electronic device such as an integrated circuit or chip. The electronic device may be a terminal or a device other than a terminal. For example, the terminal may include but is not limited to the types of the terminal 11 listed above, and the other device may be a server, a network attached storage (Network Attached Storage, NAS), or the like. This is not specifically limited in this embodiment of this application.

The data processing apparatuses provided in this embodiment of this application can implement the processes that are implemented in the method embodiment FIG. 10, with the same technical effects achieved. To avoid repetition, details are not repeated herein.

Optionally, as shown in FIG. 13, an embodiment of this application further provides a communication device 1300 including a processor 1301 and a memory 1302. The memory 1302 stores a program or instruction executable on the processor 1301. For example, when the communication device 1300 is a terminal, the program or instruction is executed by the processor 1301 to implement the steps of the foregoing embodiment of the data collection method, with the same technical effects achieved. When the communication device 1300 is a network-side device, the program or instruction is executed by the processor 1301 to implement the steps of the foregoing embodiment of the data collection method, with the same technical effects achieved. To avoid repetition, details are not repeated herein.

An embodiment of this application further provides a communication device including a processor and a communication interface. When the communication device is a first device, the communication interface is configured for the first device to receive first information sent by a second device, the first information including a first identifier and a virtual beam identifier.

The processor is configured for the first device to generate a dataset based on the first information.

The processor is configured for the first device to establish an association relationship between the dataset and the first identifier; where
the first identifier is an identifier of a first relationship, and the first relationship is a mapping relationship between a beam pointing of the second device and the virtual beam identifier.

When the communication device is a second device, the processor is configured for the second device to map a beam pointing of the second device to a virtual beam identifier according to a first relationship.

The communication interface is configured for the second device to send first information to a first device, the first information including a first identifier and the virtual beam identifier; where
the first identifier is an identifier of a first relationship, and the first relationship is a mapping relationship between a beam pointing of the second device and the virtual beam identifier. This communication device embodiment corresponds to the foregoing method embodiment on the terminal side. All processes and implementations in the foregoing method embodiment are applicable to this terminal embodiment, with the same technical effects achieved.

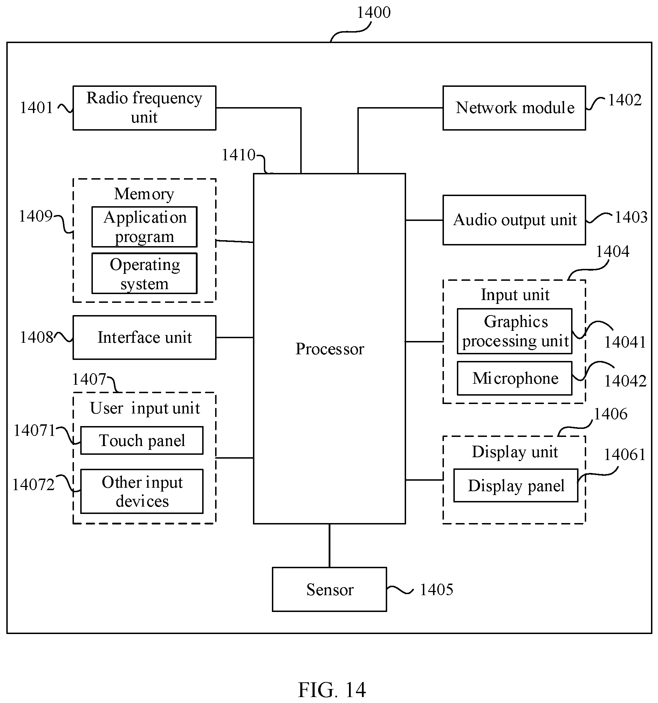

Specifically, FIG. 14 is a schematic diagram of a hardware structure of a terminal implementing the embodiments of this application.

The terminal 1400 includes but is not limited to at least part of these components: a radio frequency unit 1401, a network module 1402, an audio output unit 1403, an input unit 1404, a sensor 1405, a display unit 1406, a user input unit 1407, an interface unit 1408, a memory 1409, and a processor 1410.

Persons skilled in the art can understand that the terminal 1400 may further include a power supply (for example, a battery) supplying power to the components, and the power supply may be logically connected to the processor 1410 through a power management system. In this way, functions such as charge management, discharge management, and power consumption management are implemented by using the power management system. The structure of the terminal shown in FIG. 14 does not constitute any limitation on the terminal, and the terminal may include more or fewer components than shown in the figure, or combine some components, or have different component arrangements. Details are not described herein.

It can be understood that in this embodiment of this application, the input unit 1404 may include a graphics processing unit (Graphics Processing Unit, GPU) 14041 and a microphone 14042. The graphics processing unit 14041 processes image data of a still picture or video obtained by an image capture apparatus (for example, a camera) in a video capture mode or an image capture mode. The display unit 1406 may include a display panel 14061, and the display panel 14061 may be configured in a form of a liquid crystal display, an organic light-emitting diode, and the like. The user input unit 1407 includes at least one of a touch panel 14071 and other input devices 14072. The touch panel 14071 is also referred to as a touchscreen. The touch panel 14071 may include two parts: a touch detection apparatus and a touch controller. The other input devices 14072 may include but are not limited to a physical keyboard, a function key (for example, a volume control key or a power on/off key), a trackball, a mouse, and a joystick. Details are not described herein.

In an embodiment of this application, the radio frequency unit 1401 receives downlink data from a network-side device and transfers the data to the processor 1410 for processing; and the radio frequency unit 1401 can additionally send uplink data to the network-side device. Generally, the radio frequency unit 1401 includes but is not limited to an antenna, an amplifier, a transceiver, a coupler, a low noise amplifier, and a duplexer.

The memory 1409 may be configured to store software programs or instructions and various data. The memory 1409 may primarily include a first storage area for storing programs or instructions and a second storage area for storing data. The first storage area may store an operating system, an application program or instructions required by at least one function (for example, a sound playback function or an image playback function), and the like. In addition, the memory 1409 may include a volatile memory or a non-volatile memory, or the memory 1409 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1409 in this embodiment of this application includes but is not be limited to these or any other applicable types of memories.

The processor 1410 may include one or more processing units. Optionally, the processor 1410 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 1410.

In a case that the terminal is a first device, the radio frequency unit 1401 is configured for the first device to receive first information sent by a second device, the first information including a first identifier and a virtual beam identifier;
the processor 1410 is configured for the first device to generate a dataset based on the first information; and
the processor 1410 is configured for the first device to establish an association relationship between the dataset and the first identifier; where
the first identifier is an identifier of a first relationship, and the first relationship is a mapping relationship between a beam pointing of the second device and the virtual beam identifier.

Optionally, the processor 1410 is configured for:
the first device to generate the dataset based on the virtual beam identifier in the first information corresponding to the same first identifier.

Optionally, the radio frequency unit 1401 is configured for the first device to send second information and a first capability to a second device before the first device receives first information sent by the second device; where
the second information is used to request the second device to provide beam pointing information, and the first capability is a capability of the first device to process a virtual beam identifier.

Optionally, the first capability includes one or more of the following:
whether the first device supports a capability for processing virtual beam identifiers; and
a maximum numerical value of the virtual beam identifier supported by the first device.

Optionally, in a case that the first device is a terminal and the second device is a network device, the first identifier is carried in a measurement configuration, and the measurement configuration is associated with a reference signal resource; and

In a case that the terminal is a second device, the processor 1410 is configured for the second device to map a beam pointing of the second device to a virtual beam identifier according to a first relationship; and
the radio frequency unit 1401 is configured for second device to send first information to a first device, the first information including a first identifier and the virtual beam identifier; where
the first identifier is an identifier of a first relationship, and the first relationship is a mapping relationship between a beam pointing of the second device and the virtual beam identifier.

Optionally, the radio frequency unit 1401 is configured for the second device to receive second information and a first capability sent by the first device before the second device sends first information to the first device; where
the second information is used to request the second device to provide beam pointing information, and the first capability is a capability of the first device to process a virtual beam identifier.

Optionally, the first capability includes one or more of the following:
whether the first device supports a capability for processing virtual beam identifiers; and
a maximum numerical value of the virtual beam identifier supported by the first device.

Optionally, in a case that the first device is a network device and the second device is a terminal, the first identifier is carried in a measurement report, and the measurement report is associated with a reference signal resource and beam quality.

An embodiment of this application further provides a network device including a processor and a communication interface.

When the network device is a first device, the communication interface is configured for the first device to receive first information sent by a second device, the first information including a first identifier and a virtual beam identifier.

The processor is configured for the first device to generate a dataset based on the first information.

The processor is configured for the first device to establish an association relationship between the dataset and the first identifier; where
the first identifier is an identifier of a first relationship, and the first relationship is a mapping relationship between a beam pointing of the second device and the virtual beam identifier.

When the network device is a second device, the processor is configured for the second device to map a beam pointing of the second device to a virtual beam identifier according to a first relationship.

The communication interface is configured for the second device to send first information to a first device, the first information including a first identifier and the virtual beam identifier; where
the first identifier is an identifier of a first relationship, and the first relationship is a mapping relationship between a beam pointing of the second device and the virtual beam identifier.

The network device embodiment corresponds to the foregoing method embodiment. The implementation processes and implementations of the foregoing method embodiment are applicable to the network device embodiment, with the same technical effects achieved.

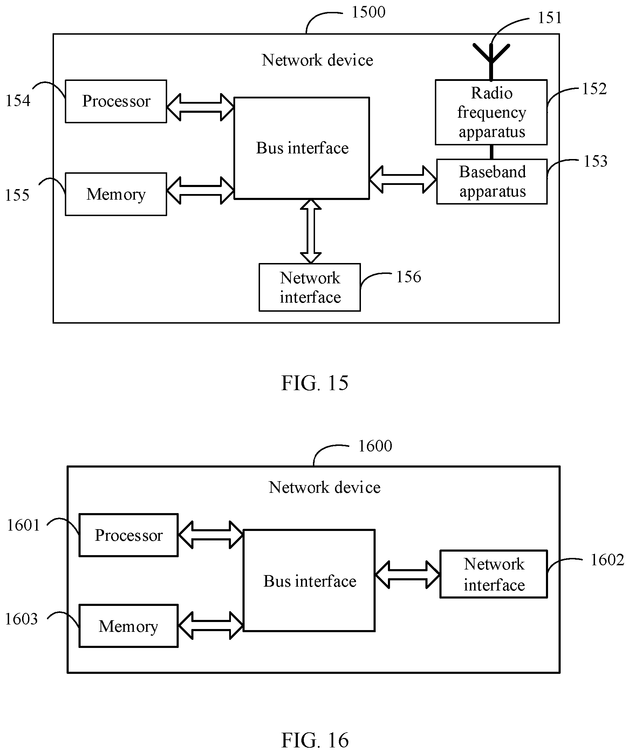

Specifically, an embodiment of the application further provides a network device, where the network device is an access network device. As shown in FIG. 15, the network device 1500 includes an antenna 151, a radio frequency apparatus 152, a baseband apparatus 153, a processor 154, and a memory 155. The antenna 151 is connected to the radio frequency apparatus 152. In uplink, the radio frequency apparatus 152 receives information through the antenna 151, and sends the received information to the baseband apparatus 153 for processing. In downlink, the baseband apparatus 153 processes to-be-sent information, and sends the information to the radio frequency apparatus 152; and the radio frequency apparatus 152 processes the received information and then sends the information out through the antenna 151.

The method performed by the network device in the foregoing embodiment may be implemented on the baseband apparatus 153. The baseband apparatus 153 includes a baseband processor.

The baseband apparatus 153 may include, for example, at least one baseband processing unit, where a plurality of chips are disposed on the baseband processing unit. As shown in FIG. 15, one of the chips is, for example, a baseband processor, and connected to the memory 155 through a bus interface, to invoke the program in the memory 155 to perform the operations of the network device shown in the foregoing method embodiment.

The network device may further include a network interface 156, where the interface is, for example, a common public radio interface (common public radio interface, CPRI).

Specifically, the network device 1500 in this embodiment of this application further includes: an instruction or program stored in the memory 155 and capable of running on the processor 154. The processor 154 invokes the instruction or program in the memory 155 to perform the method performed by the modules shown in FIG. 11 and/or FIG. 12, with the same technical effects achieved. To avoid repetition, details are not repeated herein.

Specifically, an embodiment of the application further provides a network device, where the network device is a core network device. As shown in FIG. 16, the network device 1600 includes a processor 1601, a network interface 1602, and a memory 1603. The network interface 1602 is, for example, a common public radio interface (Common Public Radio Interface, CPRI).

Specifically, the network device 1600 in this embodiment of this application further includes: an instruction or program stored in the memory 1603 and capable of running on the processor 1601. The processor 1601 invokes the instruction or program in the memory 1603 to perform the method performed by the modules shown in FIG. 11 and/or FIG. 12, with the same technical effects achieved. To avoid repetition, details are not repeated herein.

An embodiment of this application further provides a readable storage medium, where the readable storage medium stores a program or instructions, and when the program or instructions are executed by a processor, the processes of the foregoing embodiment of the data collection method are implemented, with the same technical effects achieved. To avoid repetition, details are not repeated herein.

The processor is a processor in the terminal in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface. The communication interface is coupled to the processor. The processor is configured to run a program or instruction, to implement the processes of the foregoing embodiment of the data collection method, with the same technical effects achieved. To avoid repetition, details are not repeated herein.

It should be understood that the chip mentioned in this embodiment of this application may also be referred to as a system-on-chip, a system chip, a system-on-a-chip, or a system on a chip, or the like.

An embodiment of this application further provides a computer program/program product, where the computer program/program product is stored in a storage medium, and the computer program/program product is executed by at least one processor to implement the processes of the foregoing embodiments of the data collection methods, with the same technical effects achieved. To avoid repetition, details are not repeated herein.

An embodiment of this application further provides a communication system including a first device and a second device. The first device may be configured to perform the steps of the method on the first device side, and the second device may be configured to perform the steps of the method on the second device side.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

Based on the above description of embodiments, persons skilled in the art can clearly understand that the method in the foregoing embodiments can be implemented through software on a necessary general hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A dataset generation method, comprising:
receiving, by a first device, first information from a second device, wherein the first information comprises a first identifier and data information, the data information being information obtained by processing information related to device communication in a target processing manner and the first identifier being used to indicate the target processing manner; and
generating, by the first device, a dataset based on the first identifier, wherein the dataset comprises data information associated with the first identifier, the dataset is used for artificial intelligence AI model processing, and the AI model processing comprises at least one of model inference of AI models, model training of AI models, and model monitoring of AI models.

2. The method according to claim 1, wherein after the generating, by the first device, a dataset based on the first identifier, the method further comprises:
performing at least one of the following according to a processed AI model:
beam prediction, channel prediction, channel quality prediction, mobility management, or quality of experience QoE prediction.

3. The method according to claim 1, wherein the information related to device communication comprises beam information of the second device, and the method further comprises:
determining, by the first device, beam quality based on an AI model and the dataset.

4. The method according to claim 1, wherein the information related to device communication comprises beam information of the second device, the first information is associated with a reference signal resource, the dataset further comprises channel quality information obtained from channel measurement based on the beam information of the second device, and the channel quality information is associated with the reference signal resource.

5. The method according to claim 4, wherein the first device is a terminal, the second device is a network-side device, and the first information is sent through a measurement configuration; or
the first device is a network-side device, the second device is a terminal, and the first information is sent through a measurement report.

6. The method according to claim 1, wherein before the receiving, by the first device, first information from a second device, the method further comprises:
sending, by the first device, second information to the second device, the second information comprising at least one of first indication information and second indication information; wherein
the first indication information is used to indicate a data collection requirement, and the second indication information is used to indicate a data processing capability of the first device for the first information.

7. The method according to claim 6, wherein the data processing capability of the first device for the first information comprises at least one of the following:
whether to support generating a dataset using the first information;
a maximum quantity of the data information supported; or
maximum and minimum numerical values supported for processing.

8. The method according to claim 6, wherein the data collection requirement comprises at least one of the following:
a data collection object; or
the number of data collections.

9. The method according to claim 8, wherein the information related to device communication comprises information about the data collection object.

10. The method according to claim 8, wherein the data collection object comprises at least one of the following:
a beam pointing;
a 3 dB beamwidth;
a beam gain;
an antenna pattern;
a terminal moving speed;
a terminal location;
a base station location;
cell line-of-sight LOS distribution;
cell non-line-of- sight NLOS distribution; or
an antenna configuration parameter.

11. The method according to claim 1, wherein the target processing manner comprises at least one of the following:
data bias processing;
data scaling processing;
function transformation processing;
multidimensional mapping processing; or
out-of-order processing.

12. An information sending method, comprising:
processing, by a second device, information related to device communication in a target processing manner to obtain data information; and
sending, by the second device, first information to a first device, wherein the first information comprises a first identifier and the data information, the first identifier being used to indicate the target processing manner; wherein
the first information is used to generate a dataset, the dataset comprises data information associated with the first identifier, the dataset is used for artificial intelligence AI model processing, and the AI model processing comprises at least one of model inference of AI models, model training of AI models, and model monitoring of AI models.

13. The method according to claim 12, wherein a processed AI model is used to perform at least one of the following:
beam prediction, channel prediction, channel quality prediction, mobility management, or quality of experience QoE prediction.

14. The method according to claim 12, wherein the information related to device communication comprises beam information of the second device, the first information is associated with a reference signal resource, the dataset further comprises channel quality information obtained from channel measurement based on the beam information of the second device, and the channel quality information is associated with the reference signal resource.

15. The method according to claim 14, wherein the first device is a terminal, the second device is a network-side device, and the first information is sent through a measurement configuration; or
the first device is a network-side device, the second device is a terminal, and the first information is sent through a measurement report.

16. The method according to claim 12, wherein before the sending, by the second device, first information to a first device, the method further comprises:
receiving, by the second device, second information sent by the first device, the second information comprising at least one of first indication information and second indication information; wherein
the first indication information is used to indicate a data collection requirement, and the second indication information is used to indicate a data processing capability of the first device for the first information.

17. The method according to claim 16, wherein the data processing capability of the first device for the first information comprises at least one of the following:
whether to support obtaining a dataset using the first information;
a maximum quantity of the data information supported; or
maximum and minimum numerical values supported for processing.

18. The method according to claim 16, wherein the data collection requirement comprises at least one of the following:
a data collection object; or
the number of data collections.

19. The method according to claim 18, wherein the information related to device communication comprises information about the data collection object.

20. The method according to claim 18, wherein the data collection object comprises at least one of the following:
a beam pointing;
a 3 dB beamwidth;
a beam gain;
an antenna pattern;
a terminal moving speed;
a terminal location;
a base station location;
cell line-of-sight LOS distribution;
cell non-line-of- sight NLOS distribution; or
an antenna configuration parameter.

21. The method according to claim 12, wherein the target processing manner comprises at least one of the following:
data bias processing;
data scaling processing;
function transformation processing;
multidimensional mapping processing; or
out-of-order processing.

22. A dataset generation apparatus, wherein a first device comprises the dataset generation apparatus, comprising:
a receiving module, configured to receive first information from a second device, wherein the first information comprises a first identifier and data information, the data information being information obtained by processing information related to device communication in a target processing manner and the first identifier being used to indicate the target processing manner; and
a generating module, configured to generate a dataset based on the first identifier, wherein the dataset comprises data information associated with the first identifier, the dataset is used for artificial intelligence AI model processing, and the AI model processing comprises at least one of model inference of AI models, model training of AI models, and model monitoring of AI models.

23. An information sending apparatus, wherein a second device comprises the information sending apparatus, comprising:
a processing module, configured to process information related to device communication in a target processing manner to obtain data information; and
a sending module, configured to send first information to a first device, wherein the first information comprises a first identifier and the data information, the first identifier being used to indicate the target processing manner; wherein
the first information is used to generate a dataset, the dataset comprises data information associated with the first identifier, the dataset is used for artificial intelligence AI model processing, and the AI model processing comprises at least one of model inference of AI models, model training of AI models, and model monitoring of AI models.

24. A first device, comprising a processor and a memory, wherein the memory has stored thereon a program or instruction capable of running on the processor, and when the program or instruction is executed by the processor, the steps of the dataset generation method according to any one of claims 1 to 11 are implemented.

25. A second device, comprising a processor and a memory, wherein the memory has stored thereon a program or instruction capable of running on the processor, and when the program or instruction is executed by the processor, the steps of the information sending method according to any one of claims 12 to 21 are implemented.

26. A readable storage medium, wherein the readable storage medium has stored thereon a program or instruction, and when the program or instruction is executed by a processor, the steps of the dataset generation method according to any one of claims 1 to 11 are implemented, or the steps of the information sending method according to any one of claims 12 to 21 are implemented.

27. A data collection method, comprising:
receiving, by a first device, first information sent by a second device, the first information comprising a first identifier and a virtual beam identifier;
generating, by the first device, a dataset based on the first information; and
establishing, by the first device, an association relationship between the dataset and the first identifier; wherein
the first identifier is an identifier of a first relationship, and the first relationship is a mapping relationship between a beam pointing of the second device and the virtual beam identifier.

28. The method according to claim 27, wherein the generating, by the first device, a dataset based on the first information comprises:
generating, by the first device, the dataset based on the virtual beam identifier in the first information corresponding to the same first identifier.

29. The method according to claim 27, wherein before the receiving, by a first device, first information sent by a second device, the method further comprises:
sending, by the first device, second information and a first capability to the second device; wherein
the second information is used to request the second device to provide beam pointing information, and the first capability is a capability of the first device to process a virtual beam identifier.

30. The method according to claim 29, wherein the first capability comprises one or more of the following:
whether the first device supports a capability for processing virtual beam identifiers; and
a maximum numerical value of the virtual beam identifier supported by the first device.

31. The method according to claim 27, wherein
in a case that the first device is a terminal and the second device is a network device, the first identifier is carried in a measurement configuration, and the measurement configuration is associated with a reference signal resource; and
in a case that the first device is a network device and the second device is a terminal, the first identifier is carried in a measurement report, and the measurement report is associated with a reference signal resource and beam quality.

32. A data processing method, comprising:
mapping, by a second device, a beam pointing of the second device to a virtual beam identifier according to a first relationship; and
sending, by the second device, first information to a first device, the first information comprising a first identifier and the virtual beam identifier; wherein
the first identifier is an identifier of a first relationship, and the first relationship is a mapping relationship between a beam pointing of the second device and the virtual beam identifier.

33. The method according to claim 32, wherein before the sending, by the second device, first information to a first device, the method further comprises:
receiving, by the second device, second information and a first capability sent by the first device; wherein
the second information is used to request the second device to provide beam pointing information, and the first capability is a capability of the first device to process a virtual beam identifier.

34. The method according to claim 33, wherein the first capability comprises one or more of the following:
whether the first device supports a capability for processing virtual beam identifiers; and
a maximum numerical value of the virtual beam identifier supported by the first device.

35. The method according to claim 32, wherein
in a case that the first device is a terminal and the second device is a network device, the first identifier is carried in a measurement configuration, and the measurement configuration is associated with a reference signal resource; and
in a case that the first device is a network device and the second device is a terminal, the first identifier is carried in a measurement report, and the measurement report is associated with a reference signal resource and beam quality.

36. A data collection apparatus, wherein the apparatus is applied to a first device, and the apparatus comprises:
a first receiving module, configured for the first device to receive first information sent by a second device, the first information comprising a first identifier and a virtual beam identifier;
a generating module, configured for the first device to generate a dataset based on the first information; and
an establishing module, configured for the first device to establish an association relationship between the dataset and the first identifier; wherein
the first identifier is an identifier of a first relationship, and the first relationship is a mapping relationship between a beam pointing of the second device and the virtual beam identifier.

37. The apparatus according to claim 36, wherein the generating module is configured for:
the first device to generate the dataset based on the virtual beam identifier in the first information corresponding to the same first identifier.

38. The apparatus according to claim 36, further comprising:
a first sending module, configured for the first device to send second information and a first capability to a second device before the first device receives first information sent by the second device; wherein
the second information is used to request the second device to provide beam pointing information, and the first capability is a capability of the first device to process a virtual beam identifier.

39. The apparatus according to claim 38, wherein the first capability comprises one or more of the following:
whether the first device supports a capability for processing virtual beam identifiers; and
a maximum numerical value of the virtual beam identifier supported by the first device.

40. The apparatus according to claim 36, wherein
in a case that the first device is a terminal and the second device is a network device, the first identifier is carried in a measurement configuration, and the measurement configuration is associated with a reference signal resource; and
in a case that the first device is a network device and the second device is a terminal, the first identifier is carried in a measurement report, and the measurement report is associated with a reference signal resource and beam quality.

41. A data processing apparatus, wherein the apparatus is applied to a second device and comprises:
a mapping module, configured for the second device to map a beam pointing of the second device to a virtual beam identifier according to a first relationship; and
a second sending module, configured for the second device to send first information to a first device, the first information comprising a first identifier and the virtual beam identifier; wherein
the first identifier is an identifier of a first relationship, and the first relationship is a mapping relationship between a beam pointing of the second device and the virtual beam identifier.

42. The apparatus according to claim 41, further comprising:
a second receiving module, configured for the second device to receive second information and a first capability sent by the first device before the second device sends first information to the first device; wherein
the second information is used to request the second device to provide beam pointing information, and the first capability is a capability of the first device to process a virtual beam identifier.

43. The apparatus according to claim 42, wherein the first capability comprises one or more of the following:
whether the first device supports a capability for processing virtual beam identifiers; and
a maximum numerical value of the virtual beam identifier supported by the first device.

44. The apparatus according to claim 41, wherein
in a case that the first device is a terminal and the second device is a network device, the first identifier is carried in a measurement configuration, and the measurement configuration is associated with a reference signal resource; and
in a case that the first device is a network device and the second device is a terminal, the first identifier is carried in a measurement report, and the measurement report is associated with a reference signal resource and beam quality.

45. A communication device, comprising a processor and a memory, wherein the memory has stored thereon a program or instruction capable of running on the processor, when the program or instruction is executed by the processor, the steps of the data collection method according to any one of claims 1 to 31 are implemented, or the steps of the data collection method according to any one of claims 32 to 35 are implemented.

46. A readable storage medium, wherein the readable storage medium has stored thereon a program or instruction, and when the program or instruction is executed by a processor, the steps of the data collection method according to any one of claims 1 to 31 are implemented, or the steps of the data collection method according to any one of claims 32 to 35 are implemented.
